# EUROPEAN PATENT APPLICATION

(11) **EP 2 071 026 A1**
(43) Date of publication of application: **17.06.2009**
(21) Application number: 08722509.0
(22) Date of filing: 19.03.2008
(51) Int. Cl.: C12N 15/09, C12M 1/00, C12Q 1/68

(54) **NUCLEIC ACID DETECTION CASSETTE AND NUCLEIC ACID DETECTION APPARATUS**

(30) Priority: 23.03.2007 JP 2007077915; 19.03.2008 JP 2008070976
(71) Applicant: Kabushiki Kaisha Toshiba, Minato-ku Tokyo 105-8001 (JP)
(72) Inventor: HONGO, Sadato, 1-1, Shibaura 1-chome, Mintako-ku Tokyo 105-8001 (JP); KOKUBO, Takahiro, 1-1, Shibaura 1-chome, Minato-ku Tokyo 105-8001 (JP); HORIUCHI, Hideki, 1-1, Shibaura 1-chome, Minato-ku Tokyo 105-8001 (JP); HASHIMOTO, Koji, 1-1, Shibaura 1-chome, Minato-ku Tokyo 105-8001 (JP); OKADA, Jun, 1-1, Shibaura 1-chome, Minato-ku Tokyo 105-80001 (JP)
(74) Representative: HOFFMANN EITLE
(86) International application number: PCT/JP2008/055134
(87) International publication number: WO 2008/123112

(57) **Abstract**

In a nucleic acid detecting cassette in which a heating treatment chamber and a liquid delivery channel are constituted of a stationary member and flexible members, the heating treatment chamber is held by convex heating sections from both sides, whereby the heat treatment chamber and the liquid delivery channel are spatially separated from each other. Thus, it is possible to automatically execute a consistent process including nucleic acid amplification and other required treatments of the object sample as well as detection of a target nucleic acid.

## Description

### Technical Field

The present invention relates to a nucleic acid detecting cassette suitable for automatically executing a pre-treatment step and detection of a target nucleic acid following the pre-treatment step, and a nucleic acid detecting apparatus using the nucleic acid detecting cassette.

### Background Art

In the medical field, the recent development of genetic engineering has gradually enabled diseases to be genetically diagnosed and prevented. Such a diagnosis is called a genetic diagnosis and enables the detection of a human genetic defect or change that may cause a disease. This allows the disease to be predicted or diagnosed before development of the disease or at a very early stage of the disease. Furthermore, many studies have been carried out on mapping of human genomes and on the relationship between genotypes and plagues, gradually realizing a diagnosis in accordance with the genotype of each individual (tailor-made treatment).

Furthermore, an increasing number of crimes called bioterrorism have occurred; bioterrorism involves the use of deadly poisons or poison gases. Bioterrorism thus poses a threat to society. It is essential to quickly identify a substance used in a crime to save life. Therefore, it has been very important to easily and quickly detect genes and determine the genotypes of the genes.

A known system for detecting nucleic acids individually utilizes a nucleic acid extracting apparatus, a nucleic acid amplifying apparatus, a hybridization apparatus, a nucleic acid detecting apparatus, a data analyzing apparatus, and the like. The system requires manual operations of, for example, preparing samples other than those provided by these apparatuses and moving samples among the apparatuses.

In nucleic acid amplification, if an unamplified sample is mixed with even a slight amount of a different nucleic acid, the nucleic acid may be significantly amplified, disadvantageously resulting in a misdetection. It is known that nucleic acid molecules are stable even in a dry condition and are adsorbed by various substances and that some nucleic acids float in the air. Thus, to prevent misdetections, a strict management regime needs to be established; amplified samples must not be brought to a place where nucleic acid extraction is to be performed.

In recent years, an apparatus has been developed which automatically executes a process from hybridization reaction to data analysis. An apparatus has very recently been developed which automatically executes a process from nucleic acid extraction to data analysis.

However, existing fully automatic nucleic acid detecting apparatuses do not take reliable measures against the mixture of nucleic acid molecules not to be detected. Furthermore, many of the fully automatic nucleic acid detecting apparatuses are large. These apparatuses are thus used for research applications. For example, JP-A H03-007571 (KOKAI) discloses a nucleic acid detecting apparatus that performs nucleic acid amplification and then detects a nucleic acid, as a nucleic acid detecting apparatus adapted for automatic processing (JP-A H03-007571 [KOKAI]).

Urgent problems to be solved in order to develop a nucleic acid detecting apparatus is the mixture of nucleic acid molecules not to be detected and the leakage of a nucleic acid sample to the exterior.

In general, a nucleic acid extracting and amplifying step uses a technique of heating a solution as a sample. Conventional nucleic acid analyzing apparatuses are equipped with valves that switch a delivery path for the solution as disclosed in JP-A2005-261298 (KOKAI). In the structure that switches the delivery path by the valves, steam generated by a heating treatment section flows out to an open channel section. This may disadvantageously degrade the reaction controllability of the heating treatment.

Thus, it is possible to close all the valves for switching the channel, in order to isolate the heating treatment section. However, since the position subjected to the heating treatment is not identical to the position closed by the valves, part of the area that is in communication with the heating treatment section may not be heated. As a result, the solution heated by the heating section turns into steam, which is diffused and condensed in the non-heating area. The condensation phenomenon may disadvantageously separate a part of the solution having reacted to the heating from a part of the solution turned into steam when heated and then condensed without reacting. Thus, (1) the concentration of the solution having reacted is different from that measured at the beginning of the heating, possibly preventing effective reaction. Furthermore, (2) since the solution is separated into the two portions, when the treated solution is delivered, it may be difficult to move the desired solution to a desired position. Moreover, it is possible to heat a wider area including the positions of the valves in order to avoid the above-described problems. However, the extended heating area reduces the distance to an adjacent treatment chamber, causing heat to be often transferred to an area that is not desired to undergo a temperature rise. To prevent such heat transfer, the distance needs to be set at a sufficient value, unfortunately resulting in an increase in the size of the detecting cassette.

Furthermore, to allow nucleic acids to react in the cassette, a required reagent is pre-placed in the cassette. However, the amount of the reagent is very small and holding the reagent at a required position is difficult. For example, if the reagent held in the chamber comes into contact with an outflow channel extending from the chamber, the reagent often flows along the channel and out of the chamber because of capillary action.

Thus, for small-sized cassettes, it has been desirable to enable the area reacting to heating to be limited and to allow the required solution movement to be reliably achieved. Furthermore, it has been necessary to reliably hold the internal reagent in the small-sized cassette.

### Disclosure of Invention

An object of the present invention is to provide a compact nucleic acid detecting cassette of channel closing type suitable for automatically amplifying a target nucleic acid, executing a required pre-treatment of the target nucleic acid and detecting the target nucleic acid following the pre-treatment, and a nucleic acid detecting apparatus using the nucleic acid detecting cassette.

The nucleic acid detecting cassette preferably offers both the controllability of reaction to a heating treatment and the reliability of delivery.

The nucleic acid detecting cassette preferably has a structure in which an internal reagent is reliably held at a predetermined position.

According to a first aspect of the present invention, there is provided a nucleic acid detecting cassette comprising:
a plate-like member which includes a front surface and an opposite surface opposed to the front surface, is made of a rigid material, and further includes a first through-hole (S), a second through-hole (S), a first groove (S1) formed in the front surface, a first groove (S2) formed in the front surface, and a second groove (S) formed in the opposite surface;
a first and second sheet-like members which cover the front surface and the opposite surface, respectively;
a pump section formed in the plate-like member, for supplying air pressure;
a sample chamber section which is defined when the first through-hole is closed by the first and second sheet-like members, communicates with the pump section, and holds a nucleic acid sample therein;
a detection section which is formed in the plate-like member, communicates with the sample chamber section, receives the nucleic acid sample, and detects a target nucleic acid from the nucleic acid sample;
a return channel for making the detection section and the pump section communicate with each other;
a first channel (1S1) defined when the first groove (S1) is covered with the first sheet-like member;
a first channel (1S2) defined when the first groove (S2) is covered with the first sheet-like member;
a second channel (2S) defined when the second groove (S) is covered with the second sheet-like member;
a third channel (3S) defined when the second through-hole (S) is covered with the first sheet-like member and the second sheet-like member, wherein
the pump section, the sample chamber section, and the detection section circularly communicate with each other,
the first channel (1S1) and the second channel (2S) are connected to the sample chamber section,
the third channel (3S) is connected to the second channel (2S),
the first channel (1S2) is connected to the third channel (3S),
air pressure supplied by the pump section is applied to the sample chamber section through the first channel (1S1), whereby the nucleic acid sample held in the sample chamber section is discharged through the second channel (2S), the third channel (3S), and the first channel (1S2), and
the air pressure returns from the detection section to the pump section through the circular flow path.

### Brief Description of Drawings

FIG. 1 is a perspective view schematically showing the configuration of an entire nucleic acid detecting cassette in accordance with an embodiment of the present invention;
FIG. 2 is a plan view schematically showing a top surface of the nucleic acid detecting cassette shown in FIG. 1;
FIG. 3 is a plan view schematically showing a bottom surface of the nucleic acid detecting cassette shown in FIG. 1;
FIG. 4 is a block diagram showing operation sections provided in a nucleic acid detecting apparatus that operates the nucleic acid detecting cassette shown in FIG. 1, together with the nucleic acid detecting cassette;
FIG. 5 is a sectional diagram schematically showing a delivery operation of delivering a solution from a sample chamber to amplification chambers in the nucleic acid detecting cassette shown in FIG. 1, the delivery operation being included in a heater valve function;
FIG. 6A is a sectional view schematically showing a heating operation of heating the amplification chamber in the nucleic acid detecting cassette shown in FIG. 1, the heating operation being included in a heater valve function;
FIG. 6B is a sectional view schematically showing a heating operation of heating the amplification chamber in the nucleic acid detecting cassette shown in FIG. 1, the heating operation being included in a heater valve function;
FIG. 6C is a sectional view schematically showing a heating operation of heating the amplification chamber in the nucleic acid detecting cassette shown in FIG. 1, the heating operation being included in a heater valve function;
FIG. 7A is a sectional view schematically showing an example of a structure which is different from that shown in FIGS. 1 to 3 and which distributes a sample from the sample chamber to the amplification chambers in the nucleic acid detecting cassette shown in FIG. 1, together with the distribution operation performed by the structure;
FIG. 7B is a sectional view schematically showing an example of a structure which is different from that shown in FIGS. 1 to 3 and which distributes a sample from the sample chamber to the amplification chambers in the nucleic acid detecting cassette shown in FIG. 1, together with the distribution operation performed by the structure;
FIG. 7C is a sectional view schematically showing an example of a structure which is different from that shown in FIGS. 1 to 3 and which distributes a sample from the sample chamber to the amplification chambers in the nucleic acid detecting cassette shown in FIG. 1, together with the distribution operation performed by the structure;
FIG. 8 is a block diagram schematically showing the arrangement of channels in the structure shown in FIG. 6 in which the sample is divided into three portions;
FIG. 9A is a sectional view schematically showing the operation of a pump section and a pump mechanism that operates the pump section, the pump section and the pump mechanism being provided in the nucleic acid detecting cassette shown in FIG. 1;
FIG. 9B is a sectional view schematically showing the operation of a pump section and a pump mechanism that operates the pump section, the pump section and the pump mechanism being provided in the nucleic acid detecting cassette shown in FIG. 1;
FIG. 10 is a diagram schematically showing heating of the amplification chambers in the nucleic acid detecting cassette shown in FIG. 1;
FIG. 11 is a diagram schematically showing heating of the amplification chambers in Comparative Example 1 for comparison with the nucleic acid detecting cassette shown in FIG. 1;
FIG. 12 is a diagram schematically showing heating of the amplification chambers in Comparative Example 2 for comparison with the nucleic acid detecting cassette shown in FIG. 1;
FIG. 13 is a schematic diagram showing the arrangement of channels to the chambers, the pump, and a detection section in the nucleic acid detecting cassette shown in FIG. 1;
FIG. 14 is a block diagram showing a nucleic acid detecting apparatus that carries out nucleic acid testing in the nucleic acid detecting cassette shown in FIG. 1;
FIG. 15 is a flowchart showing a testing process in the nucleic acid detecting cassette shown in FIG. 1 and the nucleic acid detecting apparatus shown in FIG. 14;
FIG. 16A is a sectional view schematically showing an example in which a supply reagent in a reaction chamber part (amplification chamber) in the nucleic acid detecting cassette shown in FIG. 1 is transferred to an adjacent chamber;
FIG. 16B is a sectional view schematically showing an example in which a supply reagent in a reaction chamber part (amplification chamber) in the nucleic acid detecting cassette shown in FIG. 1 is transferred to an adjacent chamber;
FIG. 17A is a sectional view schematically showing a reagent holding structure that can be provided in the reaction chamber in the nucleic acid detecting cassette shown in FIG. 1;
FIG. 17B are a transverse sectional view schematically showing a reagent holding structure that can be provided in the reaction chamber in the nucleic acid detecting cassette shown in FIG. 17A;
FIG. 17C is a sectional view schematically showing another reagent holding structure that can be provided in the reaction chamber in the nucleic acid detecting cassette shown in FIG. 1;
FIG. 17D is a transverse sectional view schematically showing another reagent holding structure that can be provided in the reaction chamber in the nucleic acid detecting cassette shown in FIG. 17C;
FIG. 17E is a sectional view showing an example of reagent holding structure that can be provided in the reaction chamber in the nucleic acid detecting cassette shown in FIGS. 17C and 17D;
FIG. 17F is a sectional view showing another example of reagent holding structure that can be provided in the reaction chamber in the nucleic acid detecting cassette shown in FIGS. 17C and 17D;
FIG. 17G is a sectional view schematically showing yet another reagent holding structure that can be provided in the reaction chamber in the nucleic acid detecting cassette shown in FIG. 1;
FIG. 17H is a transverse sectional view, respectively, schematically showing yet another reagent holding structure that can be provided in the reaction chamber in the nucleic acid detecting cassette shown in FIG. 17G;
FIG. 17I is a sectional view showing yet another example of reagent holding structures that can be provided in the reaction chamber in the nucleic acid detecting cassette shown in FIG. 1;
FIG. 17J is a sectional view showing yet further example of reagent holding structures that can be provided in the reaction chamber in the nucleic acid detecting cassette shown in FIG. 1;
FIG. 18 is a sectional view showing still another reagent holding structure that can be provided in the reaction chamber in the nucleic acid detecting cassette shown in FIG. 1;
FIG. 19A is a sectional view schematically showing how the liquid level in the sample holding structure shown in FIGS. 17A to 17C varies when a solution flows into the structure;
FIG. 19B is a sectional view schematically showing how the liquid level in the sample holding structure shown in FIGS. 17A to 17C varies when a solution flows into the structure;
FIG. 19C is a sectional views schematically showing how the liquid level in the sample holding structure shown in FIGS. 17A to 17C varies when a solution flows into the structure;
FIG. 20A is a sectional view showing further another reagent holding structure that can be provided in the reaction chamber in the nucleic acid detecting cassette shown in FIG. 1;
FIG. 20B is a sectional view showing a part of the structure shown in FIG. 20A;
FIG. 20C is sectional views showing a modification of a part of the structure shown in FIG. 20A;
FIG. 21A is a functional block diagram of a nucleic acid detecting cassette of a first configuration for executing nucleic acid testing;
FIG. 21B is a schematic sectional view showing a sample chamber section of the nucleic acid detecting cassette shown in FIG. 21A, and the periphery thereof;
FIG. 22A is a functional block diagram of a nucleic acid detecting cassette of a second configuration for executing nucleic acid testing;
FIG. 22B is a functional block diagram of a nucleic acid detecting cassette of a second configuration for executing nucleic acid testing;
FIG. 22C is a schematic sectional view showing a wash solution chamber section of the nucleic acid detecting cassette shown in FIG. 22A, and the periphery thereof;
FIG. 22D is a schematic sectional view showing a wash solution chamber section of the nucleic acid detecting cassette shown in FIG. 22B, and the periphery thereof;
FIG. 23A is a functional block diagram of a nucleic acid detecting cassette of a third configuration for executing nucleic acid testing;
FIG. 23B is a schematic sectional view showing a waste liquid chamber section of the nucleic acid detecting cassette shown in FIG. 23A, and the periphery thereof;
FIG. 24A is a functional block diagram of a nucleic acid detecting cassette of a fourth configuration for executing nucleic acid testing;
FIG. 24B is a schematic sectional view showing an intercalating agent chamber section of the nucleic acid detecting cassette shown in FIG. 24A, and the periphery thereof;
FIG. 25A is a functional block diagram of a nucleic acid detecting cassette of a fifth configuration for executing nucleic acid testing;
FIG. 25B is a schematic sectional view showing a sample chamber section, and an amplification chamber section of the nucleic acid detecting cassette shown in FIG. 25A, and their periphery;
FIG. 25C is a sectional view of the amplification chamber section taken in a direction different from that in FIG. 25B;
FIG. 26A is a functional block diagram of a nucleic acid detecting cassette of a sixth configuration for executing nucleic acid testing;
FIG. 26B is a schematic sectional view showing a sample holding chamber section of the nucleic acid detecting cassette shown in FIG. 26A, and the periphery thereof;
FIG. 26C is a schematic sectional view of the sample holding chamber section (M) taken in a direction different from that of FIG. 26B;
FIG. 27A is a functional block diagram showing a modification example of the nucleic acid detecting cassette of the sixth configuration for executing nucleic acid testing;
FIG. 27B is a functional block diagram showing a modification example of the nucleic acid detecting cassette shown in FIG. 27A;
FIG. 28 is a functional block diagram showing still another modification example of the nucleic acid detecting cassette shown in FIG. 27B;
FIG. 29 is a functional block diagram showing still another modification example of the nucleic acid detecting cassette shown in FIG. 28;
FIG. 30 is a schematic sectional view showing a detection section of a nucleic acid detecting cassette for executing nucleic acid testing;
FIG. 31 is a view for explaining an effect obtained when a cross-sectional area of a channel of the wash solution chamber section is increased in FIG. 22C;
FIG. 32 is a view for explaining an effect obtained when a cross-sectional area of a channel of the intercalating agent chamber section is increased in FIG. 24B;
FIG. 33 is a view for explaining an effect obtained when a cross-sectional area a channel of the sample holding chamber section is increased in FIG. 26B;
FIG. 34 is a view for explaining an effect obtained when an inner surface of the channel is subjected to hydrophobic finishing in each of FIGS. 22C, 24B, and 26B;
FIG. 35A is a view for explaining an effect obtained when an inner surface of the channel of the sample chamber section is subjected to hydrophobic finishing in FIG. 21B;
FIG. 35B is a view for explaining an effect obtained when an inner surface of the channel of the amplification chamber section is subjected to hydrophobic finishing in FIG. 25B;
FIG. 36A is a view for explaining an effect obtained when an inner surface of the channel of the amplification chamber section is subjected to hydrophobic finishing in FIG. 25C; and
FIG. 36B is a view for explaining an effect obtained when an inner surface of the channel of the sample holding chamber section is subjected to hydrophobic finishing in FIG. 26B.

### Best Mode for Carrying Out the Invention

Referring to the drawings as required, description will be given of a nucleic acid detecting cassette and a nucleic acid detecting apparatus in accordance with embodiments of the present invention.

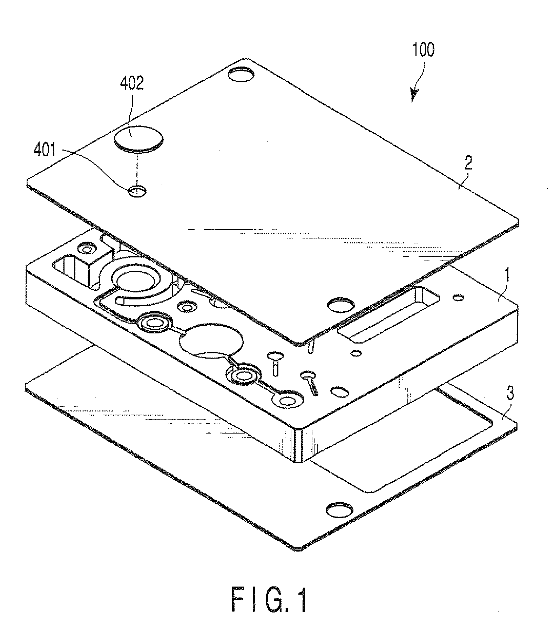

FIG. 1 is an exploded perspective view schematically showing a nucleic acid detecting cassette 100 in accordance with a first embodiment of the present invention.

The nucleic acid detecting cassette 100 is a closed channel cassette comprising a cassette main body 1 provided with sheet-like members 2 and 3. The cassette main body 1 is constituted of a rigid plate-like member and has grooves and recesses formed in a front surface and in an opposite surface; the recesses communicate with the grooves. The cassette main body 1 further has through-holes penetrating the main body 1 from the front surface (top surface) to the opposite surface (bottom surface). The cassette main body 1 has chambers formed in the through-holes surrounded by the cassette main body 1 and the sheet-like members 2 and 3. The cassette main body 1 has channels formed between both the sheet-like members 2 and 3 and the cassette main body 1 at the groove parts, the recess parts and the through-hole parts. The sheet-like members 2 and 3, at least a part or parts of which is made of flexible members, are stuck to the front surface and the opposite surface of the cassette main body 1, respectively. The grooves, recesses, and through-holes, formed in the front surface and opposite surface of the cassette main body 1, define the channels. In the description below, the channels defined by the grooves or recesses on the top surface side are referred to as top surface side channels. The channels defined by the grooves or recesses on the bottom surface side are referred to as bottom surface side channels.

The cassette main body 1 is made of a polymer material such as polycarbonate, polypropylene, POM, PMMA, polylactic acid-containing plastic, PET, PEEK, PTFE, PFE, or PPS which has a relatively low heat conductivity so as to prevent heat from being transferred among chambers. The sheet-like member 2 is preferably made of silicon rubber, polypropylene rubber, urethane rubber, elastomer, or the like which has a relatively high heat conductivity so as to transfer heat from a heater to the interior of the chambers. Even if the high-heat-conductivity material is not selected for the flexible sheet, a reduction in film thickness allows the flexible sheet to exert similar effects. Or heat-conducting materials can be contained in the flexible sheet, especially at the chamber parts. The grooves, the recesses and the through-holes may be made by cutting the plate-like material or by injection molding or pressing during molding.

### (First Configuration)

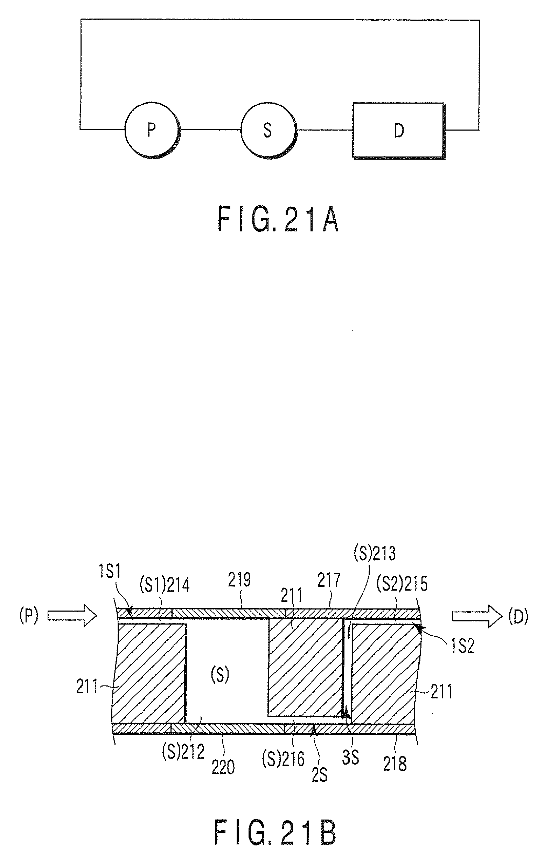

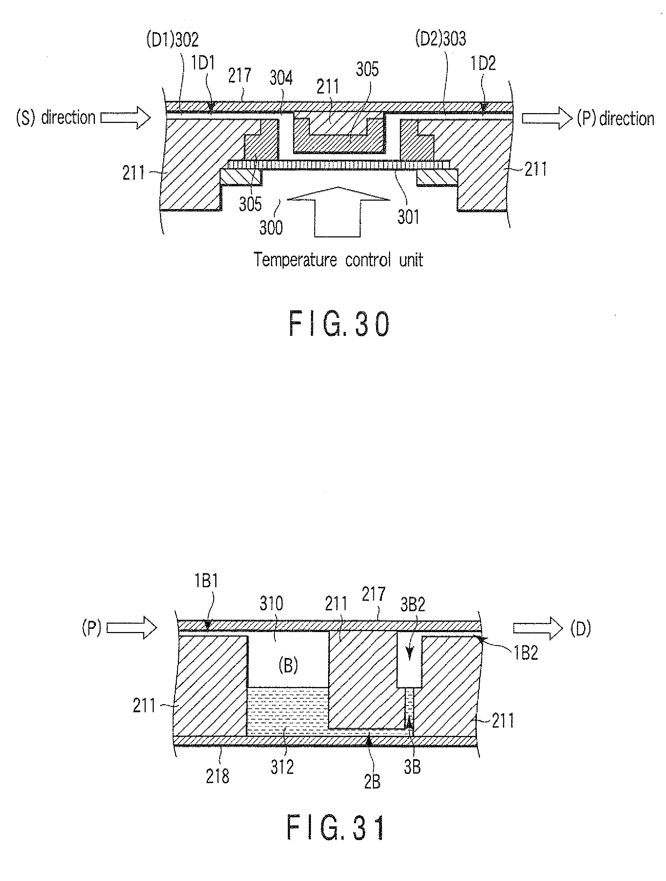

FIG. 21A is a functional block diagram of a nucleic acid detecting cassette of a first configuration, and FIG. 21B is a schematic sectional view showing a sample chamber section (S) of the nucleic acid detecting cassette of a first configuration, and the periphery thereof. FIG. 30 is a schematic sectional view showing a detection section (D) of the nucleic acid detecting cassette of the first configuration, and the periphery thereof.

As shown in FIG. 21A, the nucleic acid detecting cassette of the first configuration includes a pump section (P) for supplying air pressure, a sample chamber section (S) for holding a nucleic acid sample, and a detection section (D) for detecting a target nucleic acid from the nucleic acid sample, which are provided on the same cassette main body. The pump section (P), sample chamber section (S), and detection section (D) circularly communicate with each other through a channel. When detection is performed, first, a nucleic acid sample is put into the sample chamber section (S) from an input hole provided in the sample chamber section (S). In the sample chamber, reagents for sample pretreatment such as nucleic acid extraction and nucleic acid amplification are prepared in advance if necessary, and the nucleic acid sample put into the sample chamber section (S) may be automatically subjected to the pretreatment in the sample chamber section (S).

Then, gaseous pressure is supplied from the pump section (P) to the sample chamber section (S) through the channel, whereby the nucleic acid sample in the sample chamber section (S) is discharged to the channel.

The discharged nucleic acid sample is supplied to the detection section (D) through the channel. The detection section (D) is provided with, for example, a device for detecting a target nucleic acid in a sample such as a DNA chip in which a nucleic acid probe is fixed to a substrate.

When the detection section is provided with a DNA chip, by further setting the nucleic acid sample and the DNA chip under hybridization conditions, the nucleic acid sample and the nucleic acid probe induce a hybridization reaction.

Then, by supplying air pressure from the pump section (P) to the detection section (D) through the channel, the nucleic acid sample turned into a waste liquid is discharged from the detection section (D).

Then, the hybridization between the nucleic acid sample and the nucleic acid probe is detected in the detection section (D) by a known method (a fluorescence detection method, an electrochemical detection method using an intercalating agent, and the like), whereby the presence of the target nucleic acid in the nucleic acid sample is detected.

The waste liquid and the air pressure supplied from the pump section (P) finally return from the detection section (D) in the direction to the pump section (P).

FIG. 21B shows a schematic sectional structure of the periphery of a sample chamber section (S) of the nucleic acid detecting cassette of the first configuration.

A plate-like member 211 having a front surface and an opposite surface is provided with a first through-hole (S) 212, a second through-hole (S) 213, first grooves (S1) 214 and (S2) 215 which are formed in the front surface, and a second groove (S) 216 formed in the opposite surface.

The front surface and the opposite surface of the plate-like member are covered with a first sheet-like member 217 and a second sheet-like member 218, respectively. At least regions 219 and 220 of the first and second sheet-like members 217 and 218 covering the through-hole (S) 212 consist of a flexible material. All the region of the first sheet-like member 217 and the second sheet-like member 218 may be composed of a flexible material.

The sample chamber section (S) is defined when the first through-hole (S) 212 is closed with the first and second sheet-like members 217 and 218. When the first groove (S1) 214 on the front surface side is covered with the first sheet-like member 217, a first channel (1S1) which is a top surface side channel is defined. When the first groove (S2) 215 on the front surface side is covered with the first sheet-like member 217, a first channel (1S2) which is a top surface side channel is defined. When the second groove (S) 216 on the opposite surface side is covered with the second sheet-like member 218, a second channel (2S) which is a bottom surface side channel is defined. Further, when the second through-hole (S) 213 is covered with the first sheet-like member 217 and the second sheet-like member 218, a third channel (3S) which is a through channel is defined.

The first channel (1S1) and the second channel (2S) are connected to the sample chamber section (S). The third channel (3S) is connected to the second channel (2S). The first channel (1S2) is connected to the third channel (3S). Further, the first channel (1S1) communicates with the pump section (P). The first channel (1S2) communicates with the detection section (D).

When a force applied from outside presses a region 219 of the first sheet-like member 217 covering the first through-hole (S) 212 against the opening section on the front surface side of the through-hole (S) 212 of the sample chamber section (S), the first channel (1S1) is closed. Further, by removing the pressing force applied from outside, the first channel (1S1) is opened.

Further, when a force applied from outside presses a region 220 of the second sheet-like member 218 covering the first through-hole (S) 212 against the opening section on the opposite surface side of the first through-hole (S) 212 of the sample chamber section (S), the second channel (2S) is closed. Further, by removing the pressing force applied from outside, the second channel (2S) is opened.

By adjusting the timing at which the pressing force is applied to the first and second sheet-like members 217 and 218 from outside, and the timing at which the air pressure is applied from the pump section (P), the behavior of the nucleic acid sample can be controlled.

Further, by using an exothermic body as a pressing member used when pressing force is applied from outside for temperature control of the nucleic acid sample, it is also possible to subject the reagent and the nucleic acid sample in the sample chamber section (S) to heat treatment. By applying pressure to the cassette from above and below the cassette by using the exothermic body, it is possible to isolate the part to be subjected to heat treatment, prevent vapor from unexpectedly flowing out, and improve the reaction controllability by the heat treatment.

Movement of the nucleic acid sample is performed in the following manner.

A nucleic acid sample is put into the sample chamber section (S) from an input hole provided in the sample chamber section (S). At this time, pressing force is applied to the second sheet-like member 218 from outside, and hence the member 218 is pressed against the sample chamber (S), whereby the second channel (2S) is closed. After the nucleic acid sample is put into the sample chamber (S), the input hole is sealed. After the sealing, pressing force is further applied to the sample chamber (S); the first sheet-like member 217 is pressed against the sample chamber section (S), thereby closing the first channel (1S1). At this time, an exothermic body may be used as a pressing member for applying pressure to the first and second sheet-like members, to thereby heat the sample chamber (S) from above and below. The procedure of pressing and heating the chamber may be skipped, depending upon the situation.

Subsequently, by removing the pressing force pressing the first and second sheet-like members 217 and 218, the first channel (1S1) and the second channel (2S) are opened. By applying the gaseous pressure supplied from the pump section (P) to the first channel (1S1), the nucleic acid sample is discharged through the second channel (2S), the third channel (3S), and the first channel (1S2). The discharged nucleic acid sample is supplied to the detection section (D).

FIG. 30 shows a schematic sectional view of the periphery of a detection section (D) of a nucleic acid detecting cassette. A through-hole 300 having an uneven part on an inner surface part thereof is provided in a plate-like member 211. Further, a first groove (D1) 302, and a first groove (D2) 303 are provided on the front surface side.

The front surface of the plate-like member is covered with a first sheet-like member 217. A DNA chip 301 is fitted in the uneven part formed on the inner side surface part of the through-hole 300 of the detection section (D) so as to allow the chip 301 to close the through-hole 300. The DNA chip 301 is provided with a substrate to which a nucleic acid probe is fixed. The DNA chip may have a structure in which a metallic electrode made of, for example, Au is arranged on a substrate, and a nucleic acid probe is fixed thereon. Further, in order that a probe fixing surface of the DNA chip 301 can be exposed to the reagents such as the nucleic acid sample, wash solution, intercalating agent solution, and the like, a channel 304 having an inlet port and an outlet port on the probe fixing side is formed. In order to form the channel 304, a member 305 in which a groove is formed in the surface is provided on the surface of the DNA chip 301. Further, in order to control the temperature on the DNA chip 301, a surface of the DNA chip 301 opposite to the probe fixing surface is opened and exposed to the outside. The DNA chip has a structure in which temperature control can be performed from outside by using a heating means or the like. Incidentally, in this example, although the DNA chip 301 is set in the through-hole of the plate-like member 211, a recess section may be formed in the plate-like member, and the DNA chip may be set in the recess section.

Further, the first groove (D1) 302 is covered with the first sheet-like member 217, whereby a first channel (1D1) which is a top surface side channel is defined. The first groove (D2) 303 is covered with the first sheet-like member 217, whereby a first channel (1D2) which is a top surface side channel is defined. The first channel (1D1) is connected to an inlet port of a channel 304. Further, an outlet port of the channel 303 is connected to the first channel (1D2).

By applying the air pressure from the pump section (P), the nucleic acid sample solution or the reagent such as the wash solution, or the intercalating agent solution to be described later is supplied from the inlet port of the channel 304 through the first channel (1D1), fills the channel 304 on the DNA chip, performs various reactions, and is thereafter discharged through the first channel (1D2). As described above, in the nucleic acid detecting cassette of the first configuration, after the nucleic acid sample is put into it, a closed return channel can be formed, and hence it is possible to prevent nucleic acid molecules which are not the object to be detected from being mixed, or prevent the nucleic acid sample from leaking out to the outside. Further, it is also possible to hold or move a liquid such as the nucleic acid sample, and the like with good controllability.

### (Second Configuration)

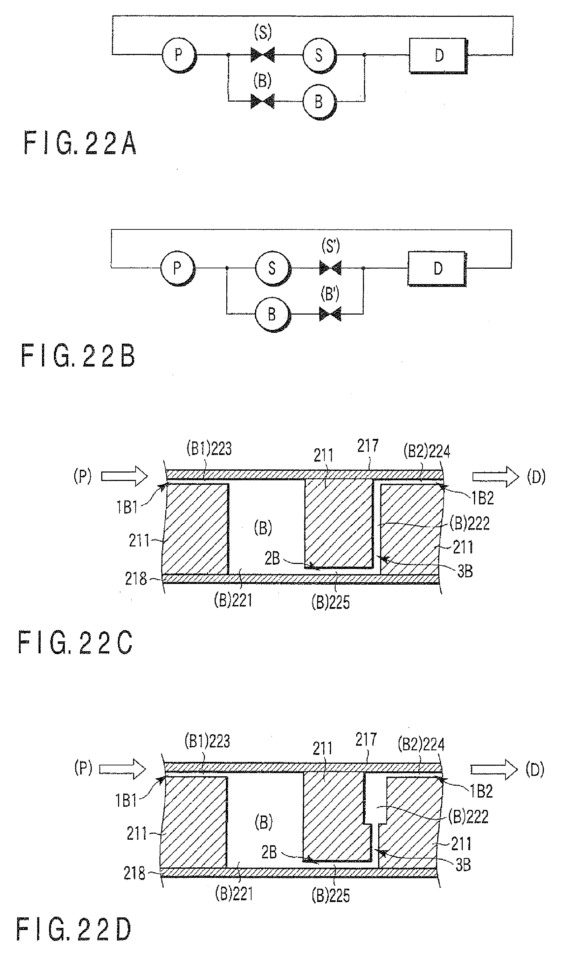

FIGS. 22A and 22B are functional block diagrams of nucleic acid detecting cassettes of a second configuration, and FIGS. 22C and 22D are schematic sectional views of nucleic acid detecting cassettes of the second configuration, and their peripheries.

As shown in FIG. 22A, the nucleic acid detecting cassette of the second configuration basically differs from that of the first configuration in further including a wash solution chamber section (B) in the cassette main body. In the wash solution chamber section (B), a wash solution for washing out the extra sample solution which is not contributed to a hybridization reaction between the nucleic acid sample and the nucleic acid probe. Due to the addition of the wash solution chamber section (B), the cassette includes a channel branched from the channel between the pump section (P) and the sample chamber section (S), the wash solution chamber section (B) connected to this channel, and a channel connected to the wash solution chamber section (B), and joining a channel between the sample chamber section (S) and the detection section (D). Further, the cassette includes a valve section (S) for switching between opening and closing of a part between the pump section (P) and the sample chamber section (S), and a valve section (B) for switching between opening and closing of a part between the pump section (P) and the wash solution chamber section (B).

The nucleic acid detecting cassette shown in FIG. 22B differs from the cassette having the configuration shown in FIG. 22A in the positions of the valve section (S) and the valve section (B). In the configuration shown in FIG. 22B, a valve section (S') for switching between opening and closing of a part between the sample chamber section (S) and the detection section (D), and a valve section (B') for switching between opening and closing of a part between the wash solution chamber section (B) and the detection section (D) are provided. Hereinafter, the "valve section (S)" implies the "valve section (S)" or the "valve section (S')", and the "valve section (B)" implies the "valve section (B)" or the "valve section (B')".

The pump section (P), the sample chamber section (S) or the wash solution chamber section (B), and the detection section (D) communicate with each other in a circular form by the channels.

When detection is performed, the nucleic acid sample is supplied from the sample chamber section (S) to the detection section (D) through the same procedure as the first configuration, and the nucleic acid sample and the nucleic acid probe cause the hybridization reaction. Then, the air pressure is supplied from the pump section (P) to the detection section (D) through the channels, whereby the nucleic acid sample is discharged from the detection section (D). At this time, the valve section (S) is in an opened state, and the valve section (B) is in a closed state.

Then, the wash solution is supplied from the wash solution chamber section (B) to the detection section (D), thereby washing out unspecifically bound nucleic acid sample from the nucleic acid probes on the DNA chip. At this time, the valve section (S) is in a closed state, and the valve section (B) is in an opened state. Further, the air pressure is supplied to the wash solution chamber section (B) from the pump section (P) through the channels. Here, although after the nucleic acid sample is discharged from the detection section (D), the valve section is switched from the valve section (S) to the valve section (B), and then the wash solution is supplied to the detection section (D), after the hybridization reaction, the valve section (B) may be opened, and the wash solution may be supplied to the detection section (D), thereby discharging the nucleic acid sample at the same time.

Then, the hybridization is detected by the detection section (D) by the known method, whereby presence of the target nucleic acid in the nucleic acid sample is detected in a same manner as that in the first configuration.

The nucleic acid sample discharged from the detection section (D), the wash solution, and the air pressure supplied from the pump section (P) are finally returned from the detection section (D) in the direction to the pump section (P).

Each of FIGS. 22C and 22D shows a schematic sectional structure of the periphery of the wash solution chamber section (B) of the nucleic acid detecting cassette of the second configuration. FIGS. 22C and 22D are of the same structure except for a part, and hence the same parts are denoted by the same reference symbols. Incidentally, in each of FIGS. 22C and 22D, the structures of the sample chamber section and the vicinity thereof may be identical with those of the first configuration. The same parts as those of the first configuration are denoted by the same reference symbols as the first configuration.

The plate-like member 211 is provided with a first through-hole (B) 221, a second through-hole (B) 222, a first groove (B1) 223 on the front surface side, a first groove (B2) 224 on the front surface side, and a second groove (B) 225 on the opposite surface side.

The wash solution chamber section (B) is defined when the first through-hole (B) 221 is closed by the first and second sheet-like members 217 and 218. When the first groove (B1) 223 on the front surface side is covered with the first sheet-like member 217, a first channel (1B1) which is a top surface side channel is defined. When the first groove (B2) 224 on the front surface side is covered with the first sheet-like member 217, a first channel (1B2) which is a top surface side channel is defined. When the second groove (B) 225 on the opposite surface side is covered with the second sheet-like member 218, a second channel (2B) which is a bottom surface side channel is defined. Further, when the second through-hole (B) 222 is covered with the first sheet-like member 217 and the second sheet-like member 218, a third channel (3B) which is a through-hole channel is defined. As shown in FIG. 22C, the cross-sectional area of the third channel (3B) may be uniform in the channel direction, or may become larger on the way on the front surface side. As shown in FIG. 22D, the channel structure is made such that the cross-sectional area becomes larger on the front surface side, whereby it is possible to prevent such an unexpected phenomenon that the wash solution held in the chamber flows out of the chamber by a capillary phenomenon from occurring. The wash solution chamber section (B) is not necessarily constituted of a through-hole of the plate-like member 211. The wash solution chamber section (B) may be defined when a recess section of the plate-like member 211 on the front surface side is covered with the first sheet-like member 217, or may be defined when a recess section of the plate-like member 211 on the opposite surface side is covered with the second sheet-like member 218.

The first channel (1B1) and the second channel (2B) are connected to the wash solution chamber section (B). The third channel (3B) is connected to the second channel (2B). The first channel (1B2) is connected to the third channel (3B). Further, the first channel (1B1) communicates with the pump section (P). The first channel (1B2) communicates with the detection section (D).

A valve section (B) for switching between opening and closing of the channel is provided at an intermediate part of the first channel (1B1). A region of the first sheet-like member 217 covering at least a part (corresponding to a valve section (B)) of the first channel (1B1) is formed of a flexible material. Closing of the valve section (B) is performed by applying pressing force to the sheet-like member 217 covering the first channel (1B1) from outside to thereby press the first sheet-like member 217 against the first groove (B1) 223. Further, opening of the valve section (B) is performed by removing the pressing force.

Valve sections (S), (S'), and (B') may have the same configuration as above.

Movement of the wash solution is performed in the following manner.

The wash solution is held in advance in the wash solution chamber section (B). At this time, the valve section (B) is either in an open state or in a closed state.

Then, the valve section (S) is closed and the valve section (B) is opened. The air pressure from the pump section (P) is applied to the wash solution chamber section (B) through the first channel (1B1). The wash solution is discharged through the second channel (2B), the third channel (3B), and the first channel (1B2), and is supplied to the detection section (D).

By adjusting the timing at which the air pressure is supplied from the pump section (P) and the opening/closing timings of the valve sections (S) and (B) as described above, the wash solution supply timing can be controlled.

Incidentally, at least the part of each of the first and second sheet-like members 217 and 218 covering the first through-hole (B) 221 can be formed of a flexible material, pressing force is applied from outside to the first sheet-like member 217, and the first sheet-like member 217 can be pressed against the opening section of the first through-hole (B) 221 on the front surface side, whereby the first channel (1B1) can be closed. Further, by removing the pressing force, the first channel (1B1) can be opened. Further, pressing force is applied from outside to the second sheet-like member 218, and the second sheet-like member 218 is pressed against the opening section of the first through-hole (B) 221 on the opposite surface side, whereby the second channel (2B) can be closed. Further, by removing the pressing force, the second channel (2B) can be opened.

By combining the control of opening/closing of the channel utilizing the external pressing force described above with the control of the pump section and the valve sections, it becomes possible to prevent the liquid from flowing out to an unexpected channel.

Further, by using an exothermic body as the pressurizing member when the pressing force is applied from outside, it is possible to subject the wash solution in the wash solution chamber to heat treatment. By applying pressure to the cassette from above and below the cassette using the exothermic body, it is possible to isolate the part to be subjected to heat treatment, prevent vapor from unexpectedly flowing out, and improve the reaction controllability.

In the cassette of the second configuration, after the nucleic acid sample is put into it, a closed return channel can be formed, and hence it is possible to prevent nucleic acid molecules which are not the object to be detected from being mixed, or prevent the nucleic acid sample from leaking out to the outside. Further, it is also possible to hold or move different types of liquids such as the nucleic acid sample, wash solution, and the like with good controllability according to the purposes of the types of the liquids.

FIG. 22A and FIG. 22B show functional block diagrams in which the valve section (S) or the valve section (S') is arranged in the channel connected to the sample chamber section (S). In this arrangement, when the pressing force is applied at the sample chamber (S), it is possible to close the first channel (1S1) as the top surface side channel and the second channel (2S) as the bottom surface side channel. That is, the sample chamber section (S) has a valve function of the valve which acts as a valve in itself. Thus, there is not necessary to provide the additional valve section (S) or the valve section (S') in the cassette.

### (Third Configuration)

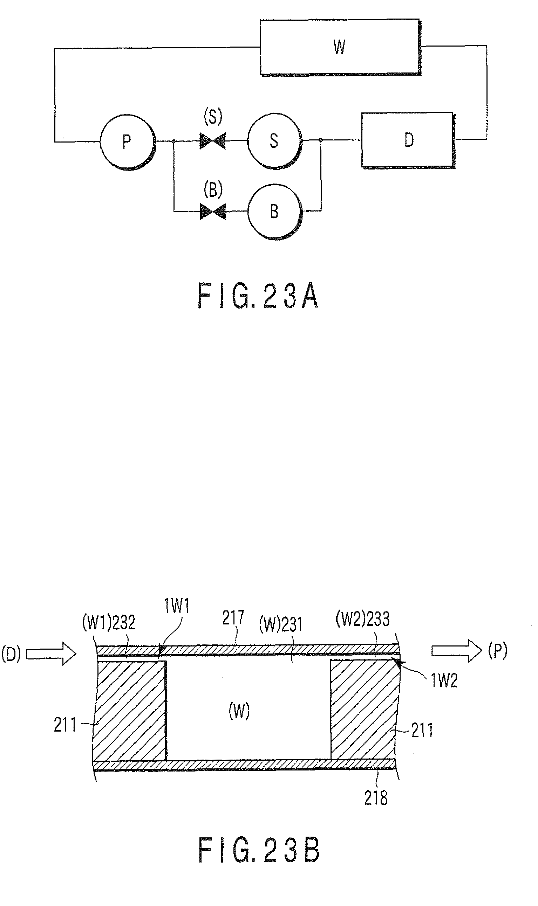

FIG. 23A is a functional block diagram of a nucleic acid detecting cassette of a third configuration, and FIG. 23B is a schematic sectional view showing a waste liquid chamber section of the nucleic acid detecting cassette shown in FIG. 23A, and the periphery thereof.

As shown in FIGS. 23A and 23B, the nucleic acid detecting cassette of the third configuration basically differs from that of the second configuration in respect to further provide a waste liquid chamber section (W) in the cassette main body. The waste liquid chamber section (W) receives a waste liquid such as the nucleic acid sample and the like discharged from the detection section (D), and holds the waste liquid. The waste liquid chamber section (W) is provided between the detection section (D) and the pump section (P) through channels. The waste liquid chamber section (W), the detection section (D), the sample chamber section (S) or the wash solution chamber section (B), and the pump section (P) communicate with each other in a circular form through the channels. Further, a valve section (S) for switching between opening and closing of a part between the pump section (P) and the sample chamber section (S), and a valve section (B) for switching between opening and closing of a part between the pump section (P) and the wash solution chamber section (B) are provided in the cassette.

The method of detection may have the same procedure as the second configuration.

The waste liquid such as the nucleic acid sample and the wash solution discharged from the detection section (D) in the direction to the pump section (P) flows into the waste liquid chamber section (W), and is held therein. The air pressure supplied from the pump section (P) returns in the direction to the pump section (P).

FIG. 23B shows a schematic sectional structure of the periphery of the waste liquid chamber section (W) of the nucleic acid detecting cassette of the third configuration. Incidentally, the structures of the parts other than the waste liquid chamber section (W), and their peripheries may be identical with the first and second configurations. The same parts as those of the first and second configurations are denoted by the same reference symbols as the first and second configurations.

The plate-like member 211 is provided with a first through-hole (W) 231. Further, a first groove (W1) 232 is formed on the front surface side of the plate-like member 211, and a first groove (W2) 233 is formed on the front surface side thereof.

The waste liquid chamber section (W) is defined when the first through-hole (W1) 231 is closed by a first sheet-like member 217 and a second sheet-like member 218. Further, when the first groove (W1) 232 is covered with the first sheet-like member, a first channel (1W1) which is a top surface side channel is defined. When the first groove (W2) 233 on the front surface side is covered with the first sheet-like member 217, a first channel (1W2) which is a top surface side channel is defined. The waste liquid chamber section (W) is not necessarily constituted of the through-hole of the plate-like member 211. The waste liquid chamber section (W) may be defined when a recess section of the plate-like member 211 on the front surface side is covered with the first sheet-like member 217, or may be defined when a recess section of the plate-like member 211 on the opposite surface side is covered with the second sheet-like member 218.

The first channel (1W1) and the first channel (1W2) are connected to the waste liquid chamber section (W).

Movement of the waste liquid is performed in the following manner.

The waste liquid flows into the waste liquid chamber section (W) from the detection section (D) by the air pressure supplied by the pump section (P) through the first channel (1W1). Although the waste liquid is held in the waste liquid chamber section (W), the air pressure is discharged from the waste liquid chamber section (W) in the direction to the pump section through the first channel (1W2).

In the cassette of the third configuration, after the nucleic acid sample is put into it, a closed return channel can be formed, and hence it is possible to prevent nucleic acid molecules which are not the object to be detected from being mixed, or prevent the nucleic acid sample from leaking out to the outside. Further, it is also possible to hold or move the nucleic acid sample, wash solution, and the waste liquid with good controllability according to the purposes of the types of the liquids. Further, channels for inflow and outflow of the liquid are formed above the waste liquid chamber section (W), and hence it is possible to separate the liquid and the gaseous body from each other, hold only the liquid in the chamber, and discharge only the gaseous body from the chamber through the channel.

In this configuration, although the configuration in which the waste liquid chamber is provided in the second configuration has been described, the waste liquid chamber of this configuration may be provided in the first configuration or other configurations.

FIG. 23A shows functional block diagrams in which the valve section (S) is arranged in the channel connected to the sample chamber section (S). In this arrangement, when the pressing force is applied at the sample chamber (S), it is possible to close the first channel (1S1) as the top surface side channel and the second channel (2S) as the bottom surface side channel. That is, the sample chamber section (S) has a valve function of the valve which acts as a valve in itself. Thus, it is not necessary to further provide the valve section (S) in the cassette.

### (Fourth Configuration)

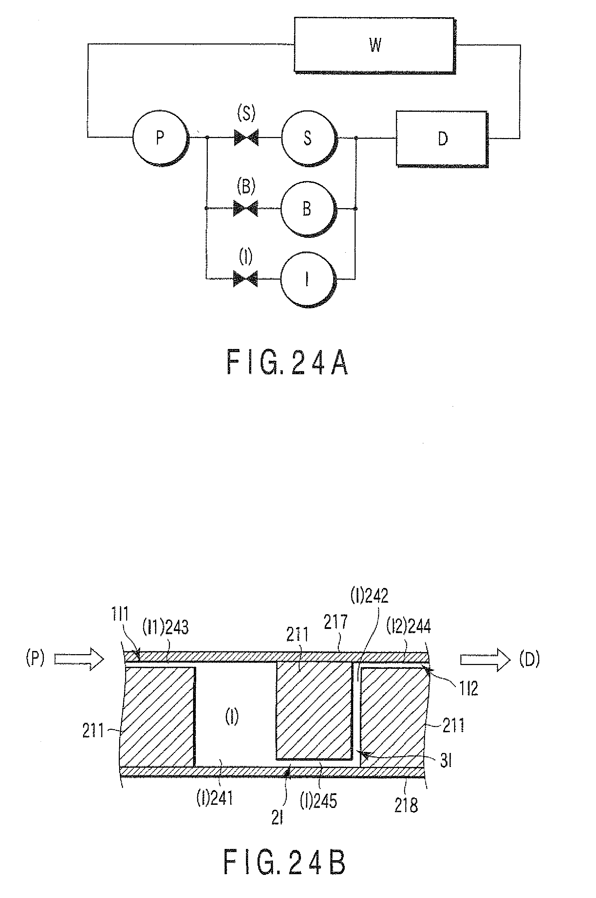

FIG. 24A is a functional block diagram of a nucleic acid detecting cassette of a fourth configuration, and FIG. 24B is a schematic sectional view showing an intercalating agent chamber section (I) of the nucleic acid detecting cassette of the fourth configuration, and the periphery thereof.

As shown in FIG. 24A, the nucleic acid detecting cassette of the fourth configuration basically differs from that of the third configuration in further including the intercalating agent chamber section (I) in the cassette main body.

In the intercalating agent chamber section (I), an intercalating agent solution is held. The intercalating agent solution is used when hybridization between the nucleic acid sample and the nucleic acid probe on the DNA chip of the detection section (D) is detected by an electrochemichal detection method. The intercalating agent has a property of specifically combining with a double stranded nucleic acid, and is a substance that causes an electrochemical oxidation-reduction reaction. In the electrochemical detection method, after the hybridization reaction between the nucleic acid sample and the nucleic acid probe, the intercalating agent solution is supplied. By detecting an electrochemical signal from the intercalating agent combined with the double stranded nucleic acid, presence of a target nucleic acid can be detected.

Owing to the addition of the intercalating agent chamber section (I), the cassette includes a channel branched from a channel between the pump section (P) and the sample chamber section (S), the intercalating agent chamber section (I) connected to this channel, and a channel connected to the intercalating agent chamber section (I), and joining a channel between the sample chamber section (S) and the detection section (D). Further, this cassette includes a valve section (I) for switching between opening and closing of a part between the pump section (P) and the intercalating agent chamber section (I).

The nucleic acid detecting cassette shown in FIG. 24A includes a valve section (I) for switching between opening and closing of a part between the pump section (P) and the intercalating agent chamber section (I). A valve section (I') (not shown) for switching between opening and closing of a channel between the intercalating agent chamber section (I) and the detection section (D) may be used in place of the valve section (I). Hereinafter the "valve section (I)" implies the "valve section (I)" or the "valve section (I')".

The pump section (P), the sample chamber section (S) or the wash solution chamber section (B) or the intercalating agent chamber section (I), and the detection section (D) communicate with each other through the channels in a circular form.

When detection is performed, first, a nucleic acid sample is supplied from the sample chamber section (S) to the detection section (D) through the same procedure as the second configuration, the nucleic acid sample and the nucleic acid probe react with each other to cause a hybridization reaction, and the nucleic acid sample is discharged from the detection section (D). At this time, the valve section (I) is in a closed state.

Then, the wash solution is supplied from the wash solution chamber section (B) to the detection section (D) through the same procedure as the second configuration, washes out the unspecifically bound sample, and the wash solution is discharged from the detection section (D). At this time, the valve section (I) is in a closed state.

Subsequently, the intercalating agent solution is supplied from the intercalating agent chamber section (I) to the detection section (D). At this time, the valve section (S) and the valve section (B) are in a closed state, and the valve section (I) is in an opened state. Further, the air pressure is supplied from the pump section (P) to the intercalating agent chamber section (I) through the channel. The supplied intercalating agent combines with the double stranded nucleic acid on the DNA chip.

Subsequently, by detecting the hybridization reaction by an electrochemical detection method at the detection section (D), presence of the target nucleic acid in the nucleic acid sample is detected.

The nucleic acid sample, and the wash solution discharged from the detection section (D) is discharged into the waste liquid chamber section (W). The air pressure supplied from the pump section (P) returns from the detection section (D) in the direction to the pump section (P) through the waste liquid chamber section (W).

FIG. 24B shows the schematic sectional structure of the periphery of the intercalating agent chamber section (I) of the nucleic acid detecting cassette of the fourth configuration. Incidentally, the structures of the sections other than the intercalating agent chamber section (I), and their periphery may be identical with those of the first to third configurations. The same parts as those of the first to third configurations are denoted by the same reference symbols as those of the first to third configurations.

The plate-like member 211 is provided with a first through-hole (I) 241, a second through-hole (I) 242, a first groove (I1) 243 on the front surface side, a first groove (I2) 244 on the front surface side, and a second groove (I) 245 on the opposite surface side.

The intercalating agent chamber section (I) is defined when the first through-hole (I) 241 is closed by the first and second sheet-like members 217 and 218. When the first groove (I1) 243 on the front surface side is covered with the first sheet-like member 217, a first channel (1I1) which is a top surface side channel is defined. When the first groove (I2) 244 on the front surface sided is covered with the first sheet-like member 217, a first channel (1I2) which is a top surface side channel is defined. When the second groove (I) 245 on the opposite surface side is covered with the second sheet-like member 218, a second channel (2I) which is a bottom surface side channel is defined. Further, when the second through-hole (I) 242 is covered with the first sheet-like member 217 and the second sheet-like member 218, a third channel (3I) which is a through-hole channel is defined. The intercalating agent chamber section (I) is not necessarily constituted of a through-hole of the plate-like member 211. The intercalating agent chamber section (I) may be defined when a recess section of the plate-like member 211 on the front surface side is covered with the first sheet-like member 217, or may be defined when a recess section of the plate-like member 211 on the opposite surface side is covered with the second sheet-like member 218.

The first channel (1I1) and the second channel (2I) are connected to the intercalating agent chamber section (I). The third channel (3I) is connected to the second channel (2I). The first channel (1I2) is connected to the third channel (31). Further, the first channel (1I1) communicates with the pump section (P). The first channel (1I2) communicates with the detection section (D).

A valve section (I) for switching between opening and closing of the channel is provided at an intermediate part of the first channel (1I1). The valve section (I) may have the same configuration as the valve section (B) shown in the third configuration. Pressing force from outside is applied to the first sheet-like member 217 to press the member 217 against the first groove (I1) or the through-hole (I), whereby the valve section (I) is closed. Further, in order to open the valve section (I), the pressing force is removed.

Movement of the intercalating agent is performed in the following manner.

An intercalating agent solution is held in advance in the intercalating agent chamber section (I). At this time, the valve section (I) is either in a closed state or in an open state.

Subsequently, the valve section (S) and the valve section (B) are closed, the valve section (I) is opened, and the air pressure is supplied from the pump section (P) to the intercalating agent chamber section (I) through the first channel (1I1). The intercalating agent solution is discharged through the second channel (2I), the third channel (3I), and the first channel (1I2), and is supplied to the detection section (D).

As described above, by adjusting the timing at which the air pressure is supplied from the pump section (P), and the timings at which the valve sections (S), (B), and (I) are opened or closed, the timings at which the nucleic acid sample, the wash solution, and the intercalating agent solution are supplied can be controlled.

Incidentally, at least the part of each of the first and second sheet-like members 217 and 218 covering the first through-hole (I) 241 can be formed of a flexible material, pressing force is applied from outside to the first sheet-like member 217, and the first sheet-like member 217 can be pressed against the opening section of the first through-hole (I) 241 on the front surface side, whereby the first channel (1I1) can be closed. Further, by removing the pressing force, the first channel (1I1) can be opened. Further, pressing force is applied from outside to the second sheet-like member 218, and the second sheet-like member 218 is pressed against the opening section of the first through-hole (I) 241 on the opposite surface side, whereby the second channel (2I) can be closed. Further, by removing the pressing force, the second channel (2I) can be opened.

By combining the control of opening/closing of the channel utilizing the external pressing force described above with the control of the pump section and the valve sections, it becomes possible to prevent the liquid from flowing out to an unexpected channel.

Further, by using an exothermic body as the pressurizing member when the pressing force is applied from outside, it is possible to subject the inside of the intercalating agent chamber to heat treatment. By applying pressure to the cassette from above and below the cassette using the exothermic body, it is possible to isolate the part to be subjected to heat treatment, prevent vapor from unexpectedly flowing out, and improve the reaction controllability.

In the cassette of the fourth configuration, after the nucleic acid sample is put into it, a closed return channel can be formed, and hence it is possible to prevent nucleic acid molecules which are not the object to be detected from being mixed, or prevent the nucleic acid sample from leaking out to the outside. Further, it is also possible to move different types of liquids such as the nucleic acid sample, wash solution, intercalating agent solution, and the like with good controllability according to the purposes of the types of the liquids.

FIG. 24A shows functional block diagrams in which the valve section (S) is arranged in the channel connected to the sample chamber section (S). In this arrangement, if the pressing force is applied at the sample chamber (S), it is possible to close the first channel (1S1) as the top surface side channel and the second channel (2S) as the bottom surface side channel. That is, the sample chamber section (S) has a valve function of the valve which acts as a valve in itself. Thus, it is not necessary to be provided the valve section (S) in the cassette.

### (Fifth Configuration)

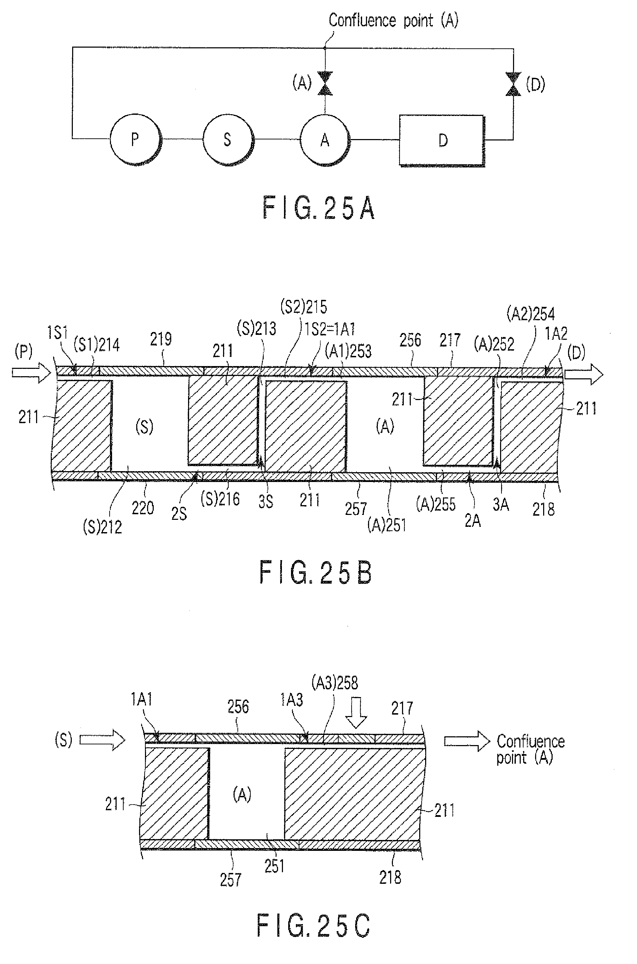

FIG. 25A is a functional block diagram of a nucleic acid detecting cassette of a fifth configuration, FIG. 25B is a schematic sectional view showing a sample chamber section (S), an amplification chamber section (A) of a nucleic acid detecting cassette of the fifth configuration, and their periphery, and FIG. 25C is a sectional view of the amplification chamber section (A) taken in a direction different from that in FIG. 25B.

As shown in FIG. 25A, the nucleic acid detecting cassette of the fifth configuration basically differs from that of the first configuration in further including an amplification chamber section (A) in the cassette main body.

In the amplification chamber section (A), reagents for performing amplification of the nucleic acid sample such as a primer and buffer are held in advance. In the sample chamber section (S), the received nucleic acid sample may be subjected to a pretreatment such as nucleic acid extraction, and a nucleic acid amplification reaction of a desired region may be carried out in the amplification chamber section (A).

The amplification chamber section (A) is provided between the sample chamber section (S) and the detection section (D) through channels. The pump section (P), sample chamber section (S), amplification chamber section (A), and detection section (D) communicate with each other through channels in a circular form. Further, a bypass channel (A) (return channel) which joins a channel between the detection section (D) and the pump section (P) at a confluence point (A), and a valve section (A) for switching between opening and closing of the bypass channel (A) are provided. Further, a valve section (D) for switching between opening and closing of the channel between the detection section (D) and the confluence point (A) is provided.

Detection is performed in the following manner.

First, a nucleic acid sample is put into the sample chamber section (S) from an input hole provided in the sample chamber section (S) through the same procedure as the first configuration. Then, the nucleic acid sample is discharged from the sample chamber section (S). At this time, the valve section (A) is set in an opened state, and the valve section (D) is set in a closed state. The discharged nucleic acid sample is supplied to the amplification chamber section (A) through the channel. At this time, only the liquid nucleic acid sample is left in the amplification chamber section (A), and only the air pressure supplied from the pump section (P) returns in the direction to the pump section (P) through the bypass channel (A).

Subsequently, amplification of the nucleic acid sample is carried out in the amplification chamber section (A).

Subsequently, the valve section (A) is closed, the valve section (D) is opened, and thus the air pressure supplied from the pump section (P) is given to the amplification chamber section (A), whereby the nucleic acid sample is discharged into the detection section (D).

Then, the presence of the target nucleic acid is detected in the detection section (D) in the same manner as the first configuration.

When the waste liquid is discharged from the detection section (D), the valve section (A) is closed, and the air pressure is applied to the detection section (D) from the pump section (P). Finally, the waste liquid and the air pressure supplied from the pump section (P) return in the direction to the pump section (P).

In FIGS. 25B and 25C, the structures of the parts other than the amplification chamber section (A) and their periphery may be identical with the first configuration. The same parts as those of the first configuration are denoted by the same reference symbols as those of the first configuration.

The structures of the sample chamber section (S), the first channel (1S1, 1S2), the second channel (2S), and the third channel (3S), and the structure of the detection section (D) are identical with the first configuration.

Further, a plate-like member 211 is provided with a first through-hole (A) 251 and a second through-hole (A) 252. Further, a first groove (A1) 253 is provided on the front surface side. The first groove (A1) 253 is provided so as to allow it to communicate with a first groove (S2) 215. These grooves may be the same groove. Further, a first groove (A2) 254 formed on the front surface side, and a second groove (A) 255 formed on the opposite surface side are provided. Furthermore, a first groove (A3) 258 is provided on the front surface side.

The front surface and the opposite surface of the plate-like member 211 are covered with a first sheet-like member 217 and a second sheet-like member 218. At least regions 256 and 257 of the first and second sheet-like members 217 and 218 covering the first through-hole (A) 251 are formed of a flexible material.

The amplification chamber section (A) is defined when the first through-hole (A) 251 is closed by the first and second sheet-like members 217 and 218. When the first groove (A1) 253 on the front surface side is covered with the first sheet-like member 217, a first channel (1A1) which is a top surface side channel is defined. This is a channel continuous with the first channel (1S2), and may be the same channel. When the first groove (A2) 254 on the front surface side is covered with the first sheet-like member 217, a first channel (1A2) which is a top surface side channel is defined. When the first groove (A3) 258 on the front surface side is covered with the first sheet-like member 217, a first channel (1A3) which is a top surface side channel is defined. When the second groove (A) 255 on the opposite surface side is covered with the second sheet-like member 218, a second channel (2A) which is a bottom surface side channel is defined. Further, when the second through-hole (A) 252 is covered with the first sheet-like member 217 and the second sheet-like member 218, a third channel which is a through-hole channel is defined.

The first channel (1A1, 1A3) and the second channel (2A) are connected to the amplification chamber section (A). The third channel (3A) is connected to the second channel (2A). The first channel (1A2) is connected to the third channel (3A). Further, the first channel (1A1) communicates with the pump section (P). The first channel (1A2) communicates with the detection section (D). The first channel (1A3) is a bypass channel (A) (return channel) which joins a channel from the detection section (D) to the pump section at a confluence point (A). A valve section (A) for switching between opening and closing of the bypass channel (A) is provided at an intermediate part of the first channel (1A3). A region of the first sheet-like member 217 covering at least a part (corresponding to the valve section (A)) of the first channel (1A3) 251 is formed of a flexible material. Closing of the valve section (A) can be performed by applying pressing force from outside to the first sheet-like member covering the first channel (1A3), and pressing the first sheet-like member 217 against the first groove (A3) 258. Further, opening of the valve section (A) is performed by removing the pressing force.

Further, between the detection section (D) and the pump section (P), a valve section (D) for switching between opening and closing of the channel from the detection section (D) to pump section (P) is provided. A region of the first sheet-like member 217 covering at least a part (corresponding to the valve section (D)) of the first channel (1D2) is formed of a flexible material. Switching of the valve section (D) can be performed by, in the same manner as the valve section (A), applying/removing pressing force from outside to/from the first sheet-like member 217 covering the first channel (1D2).

Further, pressing force is applied from outside to a region 256 of the first sheet-like member 217 covering the first through-hole (A) 251, and the region 256 is pressed against the opening section of the first through-hole (A) 251 on the front surface side, whereby the connection between the amplification chamber section (A) and the first channel (1A1), (1A3) is interrupted. Further, by removing the pressing force applied from outside, the connection between the amplification chamber section (A) and the first channel (1A1), (1A3) is restored.

Further, by applying pressure from outside to a region 257 of the second sheet-like member 218 covering the first through-hole (A) 251 and pressing the region 257 against the opening section of the first through-hole (A) 251 on the opposite surface side, the connection between the amplification chamber section (A) and the second channel (2A) is interrupted. Further, by removing the pressure applied from outside, the connection between the amplification chamber (A) and the second channel (2A) is restored. By adjusting the timings of applying the pressure from outside to the first and second sheet-like members covering the sample chamber section (S) and the amplification chamber section (A), the timing of supplying the air pressure from the pump section (P), and the opening/closing timings of the valve sections (A) and (D), the movement timing of the nucleic acid sample can be controlled. Further, by using, as in the sample chamber section (S), an exothermic body as a pressurizing member when the pressure is applied from outside, it is also possible to subject the inside of the amplification chamber to heat treatment.

Movement of the nucleic acid sample is performed in the following manner.

A nucleic acid sample is put into the sample chamber section (S) from an input hole provided in the sample chamber section (S). At this time, pressing force can be applied from outside to the second sheet-like member 218, and the second sheet-like member 218 can be pressed against the sample chamber section (S), whereby the second channel (2S) is in a closed state. However, it is not indispensable that the second channel is in a closed state. After the nucleic acid sample is put into the sample chamber section (S), the input hole is sealed. After the sealing, pressing force is further applied from outside to the first sheet-like member 217 and the first sheet-like member 217 is pressed against the sample chamber section (S), whereby the first channel (1S1) is closed. At this time, an exothermic body may be used as a pressurizing member for applying pressure to the first and second sheet-like members, and the sample chamber section (S) may be heated from above and below. In this case, the second channel should be in a closed state in advance. However, this heating process of the sample chamber can be skipped.

Then, by removing the pressing force applied to the first and second sheet-like members 217 and 218, the first channel (1S1) and the second channel (2S) are opened. By being given the air pressure supplied from the pump section (P), the nucleic acid sample is discharged through the second channel (2S), the third channel (3S), and the first channel (1S2). At this time, the valve section (A) is brought into an opened state, and the valve section (D) is brought into a closed state.

The nucleic acid sample is supplied from the first channel (1S2=1A1) to the amplification chamber section (A). At this time, the second sheet-like member 218 is in a state where the member 218 is pressed against the amplification chamber section (A), and hence the second channel (2A) is in a closed state. The air pressure returns from the first channel (1A3) in the direction to the pump section (P) through the bypass channel (A). Only the liquid nucleic acid sample flows into the amplification chamber section (A) by gravity.

Then, the first sheet-like member 217 is pressed against the amplification chamber section (A), and the first channel (1A1, 1A3) is thereby closed. An exothermic body is used as a pressurizing member for applying pressure to the sheet-like member, and the amplification chamber section (A) is heated from above and below, whereby nucleic acid amplification is performed.

Subsequently, the valve section (A) is closed, and the valve section (D) is opened. The pressing force pressing the first and second sheet-like members 217 and 218 against the amplification chamber section (A) is removed, thereby opening the first channel (1A1, 1A3), and the second channel (2A). Furthermore, by applying the air pressure from the pump section (P) to the amplification chamber section (A) from the first channel (1A1), the nucleic acid sample held in the amplification chamber section (A) is discharged from the second channel (2A) to the third channel (3A) and the first channel (1A2), and is supplied to the detection section (D).

By virtue of the configuration described above, after the nucleic acid sample is put into the sample chamber (S), a closed return channel can be formed, and hence it is possible to prevent nucleic acid molecules which are not the object to be detected from being mixed, or prevent the nucleic acid sample from leaking out to the outside. Further, it is also possible to move different types of liquids such as the nucleic acid sample before amplification, the nucleic acid sample after amplification and the like with good controllability according to the purposes of the types of the liquids.

### (Sixth Configuration)

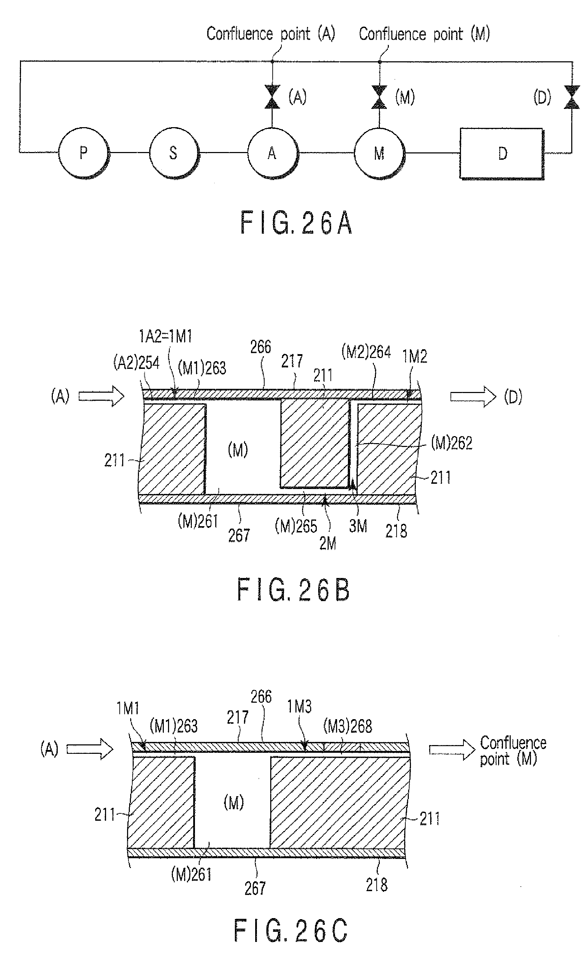

FIG. 26A is a functional block diagram of a nucleic acid detecting cassette of a sixth configuration, FIG. 26B is a schematic sectional view showing a sample holding chamber section (M) of the nucleic acid detecting cassette of the sixth configuration, and the periphery thereof, and FIG. 26C is a schematic sectional view of the sample holding chamber section (M) taken in a direction different from that of FIG. 26B.

As shown in FIG. 26A, the nucleic acid detecting cassette of the sixth configuration basically differs from that of the fifth configuration in further including the sample holding chamber section (M) in the cassette main body.

In the sample holding chamber section (M), a reagent such as a buffer or the like for adjusting the salt concentration of the nucleic acid sample may be held in advance for the detection in the detection section (D).

The sample holding chamber section (M) is provided between the amplification chamber section (A) and the detection section (D) through channels. The pump section (P), sample chamber section (S), amplification chamber section (A), sample holding chamber section (M), and detection section (D) communicate with each other through channels in a circular form. Further, a bypass channel (A) (return channel) starting from the amplification chamber section (A) and joining the channel between the detection section (D) and the pump section (P) at a confluence point (A), and a valve section (A) for switching between opening and closing of the bypass channel (A) are provided. Furthermore, a bypass channel (M) (return channel) starting from the sample holding chamber section (M) and joining the channel between the detection section (D) and the pump section (P) at a confluence point (M), and a valve section (M) for switching between opening and closing of the bypass channel (M) are provided. Moreover, between the detection section (D) and the pump section (P), a valve section (D) for switching between opening and closing of the channel between the detection section (D) and the pump section (P) is provided. The configuration of the confluence point (A), the confluence point (M) and the confluence point (D) is arbitrary between the detection section (D) and the pump section (P).

Detection is performed in the following manner.

First, a nucleic acid sample is put into the sample chamber section (S) from an input hole provided in the sample chamber section (S) through the same procedure as the fifth configuration. It is optional that the preheating treatment is executed. Then, the nucleic acid sample is discharged from the sample chamber section (S). At this time, the valve section (A) is set in an opened state, and the valve sections (M) and (D) are set in a closed state. The discharged nucleic acid sample is supplied to the amplification chamber section (A) through the channel. At this time, only the liquid nucleic acid sample is left in the amplification chamber section (A), and only the air pressure supplied from the pump section (P) returns in the direction to the pump section (P) through the bypass channel (A).

Subsequently, amplification of the nucleic acid sample is carried out in the amplification chamber section (A).

Subsequently, the valve section (A) is closed, the valve section (M) is opened, the valve section (D) is closed, and the air pressure supplied from the pump section (P) is applied to the amplification chamber section (A), whereby the nucleic acid sample is discharged from the amplification chamber section (A). The discharged nucleic acid sample is supplied to the sample holding chamber section (M) through the channel. At this time, only the liquid nucleic acid sample is left in the sample holding chamber section (M), and only the air pressure supplied from the pump section (P) returns in the direction to the pump section (P) through the bypass channel (M).

Then, mixing of the nucleic acid sample into the buffer is carried out in the sample holding chamber section (M).

Then, the valve section (A) is closed, the valve section (M) is closed, the valve section (D) is opened, and the air pressure supplied from the pump section (P) is applied to the sample holding chamber section (M), whereby the nucleic acid sample is supplied to the detection section (D).

Subsequently, presence of the target nucleic acid is detected in the detection section (D) in the same manner as the first configuration.

If the waste liquid is discharged from the detection section (D), the valve section (A) is closed, the valve section (M) is closed, the valve section (D) is opened, and the air pressure is applied from the pump section (P) to the detection section (D). The waste liquid and the air pressure supplied from the pump section (P) can return in the direction to the pump section (P).

The structures of the parts other than the sample holding chamber section (M), and their peripheries may be identical with those of the fifth configuration. The same parts as those of the fifth configuration are denoted by the same reference symbols as those of the fifth configuration.

The structures of the sample chamber section (S), the first channel (1S1, 1S2), the second channel (2S), the third channel (3S), the amplification chamber section (A), the first channel (1A1, 1A2, 1A3), the second channel (2A), the third channel (3A), the detection section (D), and their peripheries are identical with those of the fifth configuration.

Further, a plate-like member 211 is provided with a first through-hole (M) 261, and a second through-hole (M) 262. Further, a first groove (M1) 263 is provided on the front surface side. The first groove (M1) 263 is provided such that the groove (M1) communicates with a first groove (A2) 254. These grooves may be the same groove. Further, a first groove (M2) 264 formed on the front surface side, and a second groove (M) 265 formed on the opposite surface side are provided. Furthermore, a first groove (M3) 268 is provided on the front surface side.

The sample holding chamber section (M) is defined when the first through-hole (M) 261 is closed by the first and second sheet-like members 217 and 218. When the first groove (M1) 263 on the front surface side is covered with the first sheet-like member 217, a first channel (1M1) which is a top surface side channel is defined. This is a channel communicating with a first channel (1A2), and they may be the same channel. When the first groove (M2) 264 on the front surface side is covered with the first sheet-like member 217, a first channel (1M2) which is a top surface side channel is defined. When the first groove (M3) 268 is covered with the first sheet-like member 217, a first channel (1M3) is defined. When the second groove (M) 265 on the opposite surface side is covered with the second sheet-like member 218, a second channel (2M) which is a bottom surface side channel is defined. Further, when the second through-hole (M) 262 is covered with the first sheet-like member 217 and the second sheet-like member 218, a third channel (3M) which is a through-hole channel is defined. Here, the sample holding chamber section (M) is not necessarily constituted of the through-hole of the plate-like member 211. The sample holding chamber section (M) may be defined when a recess section of the plate-like member 211 on the front surface side is covered with the sheet-like member 217, or when a recess section of the plate-like member on the opposite surface side is covered with the second sheet-like member 218.

The first channel (1M1, 1M3) and the second channel (2M) are connected to the sample holding chamber section (M). The third channel (3M) is connected to the second channel (2M). The first channel (1M2) is connected to the third channel (3M). Further, the first channel (1M1) communicates with the amplification chamber section (A). The first channel (1M2) communicates with the detection section (D). Further, the first channel (1M3) is connected to the sample holding chamber section (M). The first channel (1M3) is a bypass channel (M) (return channel) which joins a channel from the detection section (D) to the pump section (P) at a confluence point (M).

A valve section (M) for switching between opening and closing of the bypass channel (M) is provided at an intermediate position of the first channel (1M3). A region of the first sheet-like member 217 covering at least a part (corresponding to the valve section (M)) of the first channel (1M3) is formed of a flexible material. Closing of the valve section (M) can be performed by applying pressing force from outside to the first sheet-like member 217 at a part thereof covering the first channel (1M3), and pressing the first sheet-like member 217 against the first groove (M3) 268. Further, opening of the valve section (M) is performed by removing the pressing force.

Further, a valve section (D) for switching between opening and closing of the channel from the detection section (D) to the pump section (P) is provided in the middle of this channel. The structure of the valve section (D) is identical with that of the fifth configuration.

By adjusting the timings of applying the pressure from outside to the first and second sheet-like members covering the sample chamber section (S) and the amplification chamber section (A), the timing of supplying the air pressure from the pump section (P), and the opening/closing timings of the valve sections (A), (M), and (D), the movement timing of the nucleic acid sample can be controlled. The regions 266 and 267 of the first and second sheet-like members 217 and 218 covering at least the first through-hole (M) 261 may be or may not be formed of a flexible material.

In case that the region 266 of the first sheet-like member 217 covering at least the first through-hole (M) 261 is formed of a flexible material, by applying pressing force from outside to the region 266 of the first sheet-like member 217 covering the first through-hole (M) 261, and pressing the region 266 against the opening section of the first through-hole (M) 261 on the front surface side, the connection between the sample holding chamber section (M) and the first channel (1M1), (1M3) is interrupted. Further, by removing the pressing force applied from outside, the connection between the sample holding chamber section (M) and the first channel (1M1), (1M3) is restored.

Further, In case that the region 267 of the second sheet-like member 218 covering at least the first through-hole (M) 261 is formed of a flexible material, by applying pressure from outside to a region 267 of the second sheet-like member covering the first through-hole (M) 261, and pressing the region 267 against the opening section of the through-hole (M) 261 on the opposite surface side, the connection between the sample holding chamber section (M) and the second channel (2M) is interrupted. Further, by removing the pressure applied from outside, the connection between the sample holding chamber section (M) and the second channel (2M) is restored. By adjusting the timings of applying the pressure from outside to the first and second sheet-like members covering the sample chamber section (S), the amplification chamber section (A), and the sample holding chamber section (M), the timing of supplying the air pressure from the pump section (P), and the opening/closing timings of the valve sections (A), (M), and (D), the movement timing of the nucleic acid sample can be controlled.

Further, by using, as in the sample chamber section (S) or in the amplification chamber section (A), an exothermic body as a pressurizing member when the pressure is applied from outside, it is also possible to subject the inside of the sample holding chamber (M) to heat treatment. By combining the control of opening/closing of the channel utilizing the external pressing force described above with the control of the pump section and the valve sections, it becomes possible to prevent the liquid from flowing out to an unexpected channel.

Movement of the nucleic acid sample is performed in the following manner.

A nucleic acid sample is put into the sample chamber section (S) from an input hole provided in the sample chamber section (S) as in the fifth configuration. At this time, pressing force may or may not be applied from outside to the second sheet-like member 218, and the second sheet-like member 218 may or may not be pressed against the sample chamber section (S), whereby the second channel (2S) is either in a closed state or in an open state. After the nucleic acid sample is put into the sample chamber section (S), the input hole is sealed. After the sealing, pressing force is further applied from outside to the first sheet-like member 217, and the first sheet-like member 217 is pressed against the sample chamber section (S), whereby the first channel (1S1) is closed. At this time, an exothermic body may be used as a pressurizing member for applying pressure to the first and second sheet-like members, and the sample chamber section (S) may be heated from above and below. This heating procedure may be skipped.

Then, by removing the pressing force applied to the first and second sheet-like members 217 and 218, the first channel (1S1) and the second channel (2S) are opened. By being given the air pressure supplied from the pump section (P), the nucleic acid sample is discharged through the second channel (2S); the third channel (3S), and the first channel (1S2). At this time, the valve section (A) is brought into an opened state, and the valve sections (M) and (D) are brought into a closed state.

The nucleic acid sample is supplied from the first channel (1S2=1A1) to the amplification chamber section (A). At this time, the second sheet-like member 218 is in a state where the member 218 is pressed against the amplification chamber section (A), and hence the second channel (2A) is in a closed state. The air pressure returns from the first channel (1A3) in the direction to the pump section (P) through the bypass channel (A). Only the liquid nucleic acid sample flows into the amplification chamber section (A) by gravity.

Then, the first sheet-like member 217 is pressed against the amplification chamber section (A), and the first channel (1A1, 1A3) is thereby closed. An exothermic body is used as a pressurizing member for applying pressure to the sheet-like member, and the amplification chamber section (A) is heated from above and below, whereby nucleic acid amplification is performed.

Subsequently, the pressing force pressing the first and second sheet-like members 217 and 218 against the amplification chamber section (A) is removed, and the first channel (1A1, 1A3), and the second channel (2A) are opened. Further, the valve section (A) is closed, and the valve section (M) is opened. Further, by applying the air pressure from the pump section (P) to the amplification chamber section (A) through the first channel (1A1), the nucleic acid sample held in the amplification chamber section (A) is discharged from the second channel (2A) into the third channel (3A) and the first channel (1A2).

The nucleic acid sample is supplied from the first channel (1A2=1M1) to the sample holding chamber section (M). The air pressure returns from the first channel (1M3) in the direction to the pump section (P) through the bypass channel (M). Only the liquid nucleic acid sample flows into the sample holding chamber section (M) by gravity. The nucleic acid sample which has flowed into the sample holding chamber is mixed with the reagent.

Subsequently, the valve section (M) is closed, and the valve section (D) is opened. Further, by applying the air pressure from the pump section (P) to the sample holding chamber section (M) from the first channel (1M1), the nucleic acid sample held in the sample holding chamber section (M) is discharged from the second channel (2M) into the third channel (3M) and the first channel (1M2), and is supplied to the detection section (D).

By virtue of the configuration described above, after the nucleic acid sample is put into the sample chamber (S), a closed return channel can be formed, and hence it is possible to prevent nucleic acid molecules which are not the object to be detected from being mixed, or prevent the nucleic acid sample from leaking out to the outside. Further, it is also possible to move different types of liquids such as the nucleic acid sample before amplification, the nucleic acid sample after amplification, and the like with good controllability according to the purposes of the types of the liquids.

### (Modification Example)

Although in the fifth configuration, the combination of the first configuration and the amplification chamber section (A) is described, the wash solution chamber section (B) described in the second configuration, or the intercalating agent chamber section (I) described in the fourth configuration may be provided together with the branched channel and the valve section in the fifth configuration. Further, the configuration may be provided with the waste liquid chamber section (W) of the third or fourth configuration at the channel between the detection section (D) and the pump section (P). The bypass channel (A) may be connected either to the waste liquid chamber section (W) or the channel. Further, in order that the target nucleic acid sample can be amplified under a plurality of different conditions, a plurality of amplification chamber sections (A) may be provided. In that case, the channel from the sample chamber section (S) to the detection section (D) may be branched into a plurality of channels, an amplification chamber section (A) may be provided in each of the branched channels, then the branched channels may be made to join each other again, thereby reaching the detection section (D).

Further, in the sixth configuration, although the configuration formed by providing the fifth configuration with the sample holding chamber section (M) is described, the wash solution chamber section (B) described in the second configuration, or the intercalating agent chamber section (I) described in the fourth configuration may be provided together with the branched channel and the valve section.

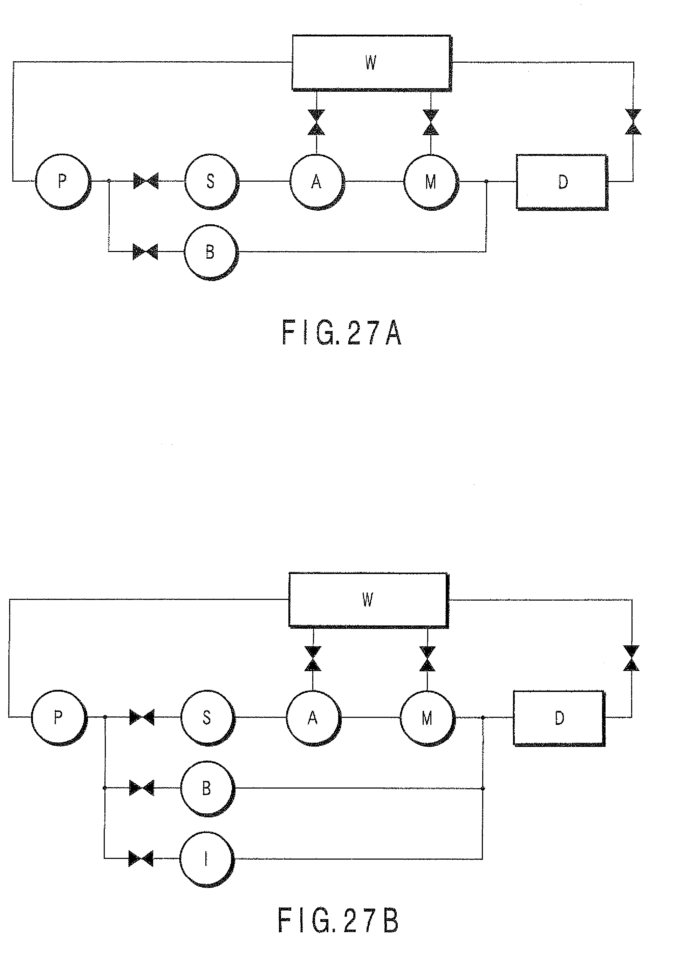

Further, the configuration may be provided with the waste liquid chamber section (W) of the third or fourth configuration at the channel from the confluence point (A) to the pump section (P), or at the channel from the confluence point (M) to the pump section (P). Alternatively, the bypass channel (A) or (M) may be connected to the waste liquid chamber section (W). (FIG. 27A or FIG. 27B)

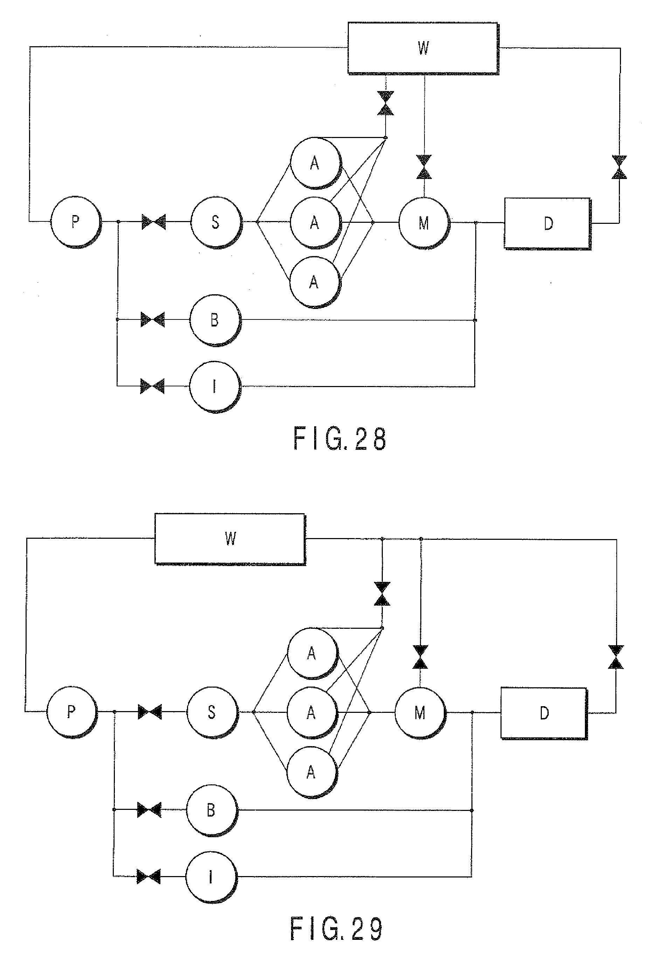

Further, in order that the target nucleic acid sample can be amplified under a plurality of different conditions, the configuration may be provided with a plurality of amplification chamber sections (A). In that case, the channel from the sample chamber section (S) to the detection section (D) may be branched into a plurality of channels, an amplification chamber section (A) may be provided in each of the branched channels, then the branched channels may be made to join each other again, thereby reaching the detection section (D). (FIG. 28)

Furthermore, the configuration may be provided with the waste liquid chamber section (W) of the third or the fourth configuration at the channel from the confluence point (A) to the pump section (P). In this case, the channels from the amplification chamber sections (A), the sample holding chamber section (M), and the detection section (D) are made to join each other, and the channel after the confluence may be connected to the waste liquid chamber section (W). (FIG. 29)

### (First Embodiment)

A structure example of the nucleic acid detecting cassette the functional block diagram of which is shown in FIG. 28 will be shown below.

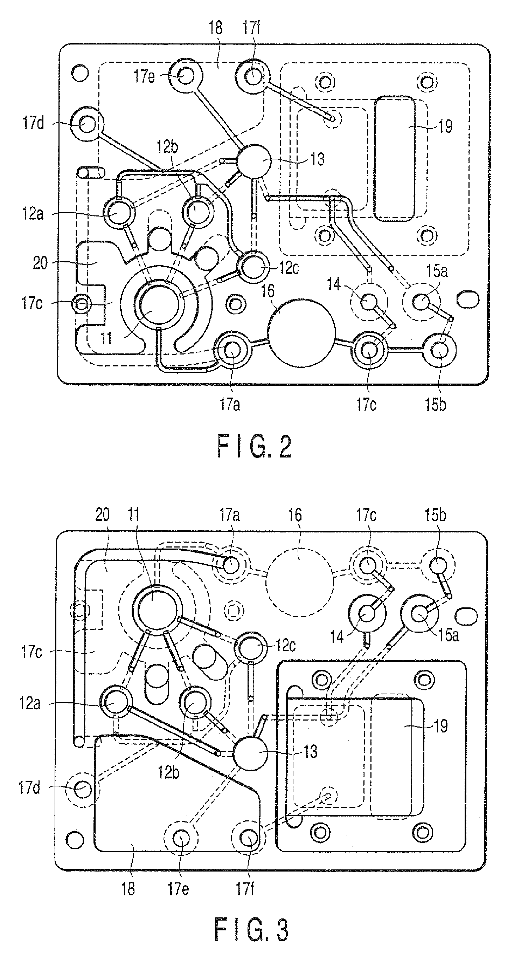

FIGS. 2 and 3 are a top view and a bottom view schematically showing the nucleic acid detecting cassette 100 the functional block diagram of which is shown in FIG. 28. FIG. 1 shows its perspective view. In FIGS. 2 and 3, the through-holes penetrating the cassette main body from the top surface to the bottom surface are defined as chambers or channels, and are all shown by solid circle lines. In FIG. 2, channels (first channels) formed on the top surface side are shown by solid lines, and the channels (second channels) formed on the bottom surface side are shown by broken lines. Further, in FIG. 3, channels formed on the bottom surface side are shown by solid lines, and the channels formed on the top surface side are shown by broken lines. As will be described later, the sample, wash solution, or intercalating agent always flows out from the corresponding chamber through a bottom surface side channel, and is discharged into the other chamber or detection section always through a top surface side channel. Accordingly, in a step in which no air pressure is applied, the sample, wash solution, or intercalating agent is held on the bottom surface side of the corresponding chamber.

The nucleic acid detecting cassette 100 is provided with a sample chamber (S) 11 into which a nucleic acid sample is injected. A flexible sheet 2 is opened at a position 401 corresponding to the sample chamber section (S) 11. The nucleic acid sample is injected into the sample chamber (S) 11 through the opening 401, which is then tightly closed by a seal 402 or the like. In FIG. 1, the seal 402 is depicted as a separate part but it is preferable that the seal 402 is partly coupled to the detecting cassette 100 to form a unity configuration so as to assure a positional relationship between the opening 401 and the seal 402. The sample chamber section (S) 11 is connected to a valve section (S) 17a via the corresponding top surface side channel (1S1). Next, the sample chamber section (S) 11 is opened, the valve section 17a closes the channel between the pump section (P) 16 and the waste chamber section (W), the valve section 15b closes the channel between the pump section (P) and the intercalating agent chamber section (I), the valve section (B) 17c closes the channel between the pump section (P) and the wash solution chamber section (B), the valve section (M) 17e and the valve section (D) 17f are closed, and the bottom surface side channels (2A) of the amplification chamber sections (A) 12a, 12b, and 12c are closed. When the pump section (P) 16 is operated in a state where the valve section (A) 17d is opened, pressure is applied to the sample in the sample chamber section (S) 11. Then, the sample is divided into three parts by the bottom surface side channels (2S) of the sample chamber section (S) 11 which is communicated to the amplification chamber sections (A) 12a, 12b, and 12c, and then the divided parts of the sample flow to the amplification chamber sections (A) 12a, 12b, and 12c.

The three divided samples are flown to the top surface side channel (1S2) from the respective bottom surface side channels (2S) via respective through-paths (3S) and then fed to amplification chamber sections 12a to 12c via the respective the top surface side channels (1A1). The plural amplification chamber sections (A) are provided for the reason that the same sample is amplified under different conditions. The number of the amplification chamber sections (A) is not limited three, and it is sufficient if the number is more than one. The amplification chamber sections (A) 12a to 12c each communicate with the valve section (A) 17d through the top surface side channels (1A3). When the valve section (A) 17d is in an opened state, the air pressure supplied to the amplification chamber sections (A) 12a to 12c is discharged into the waste liquid chamber section (W) 18 through the valve section (A) 17d, and only the liquid nucleic acid sample is fed into the amplification chamber section (A) by gravity. Further, the top surface side channel (1A1, 1A3) of each of the amplification chamber sections (A) 12a, 12b, 12c is closed, and the three samples are each subjected to nucleic acid amplification in the amplification chamber sections (A) 12a to 12c in a state where the respective amplification chambers (A) are tightly closed. Subsequently, when the pump section (P) 16 is operated in a state where the valve section (A) 17d is closed, the top surface side channel (1A1, 1A3) and the bottom surface side channel (2A) of the amplification chamber section (A) 12a are opened, and the valve section (M) 17e is opened, the sample in the amplification chamber section (A) 12a is supplied to the bottom surface side channel (2A) by the air pressure supplied to the amplification chamber section (A) 12a. The bottom surface side channel communicates with the top surface side channel (1A2) via the through-path (3A), and communicates with the mixing chamber section (holding chamber section (M)) 13 via the top surface side channel (1A2=1M1). The opening section of the mixing chamber section (M) 13 is tapered, and the sample can therefore be supplied smoothly thereto. After supplying the sample in amplification chamber section (A) 12a to the mixing chamber (M) 13, the top surface side channel (1A1, 1A3) and the bottom surface side channel (2A) of the amplification chamber section (A) 12a are closed. Thereafter, the top surface side channel (1A1, 1A3) and the bottom surface side channel (2A) of the amplification chamber section (A) 12b are opened. In this state, the pump section (P) 16 is operated so that the sample can be supplied to the mixing chamber (M) 13 from the amplification chamber section (A) 12b. The sample in the amplification chamber section (A) 12c can be also supplied to the mixing chamber (M) 13 by a same operation as described above. Thus, the three samples discharged from the top surface side channel (1M1) are supplied to the mixing chamber section (M) 13, where the three samples are mixed with each other. In this operation, it is preferable that the sample is supplied to the mixing chamber (M) from the amplification chamber section (A) in a state of closing the bottom surface side channel (2M) of the mixing chamber section (M) 13. Subsequently, the valve section is maintained in the closing state, the top surface side channel (1A1, 1A3) and the bottom surface side channel (2A) of the amplification chamber sections (A) 12a, 12b, 12c is opened, the valve section (M) 17e is closed, the bottom surface side channel (2M) of the mixing chamber section (M) 13 is opened, and the valve section (D) 17f is opened. In this state, the pump section (P) is operated and when the pressure inside the mixing chamber section (M) is increased, the mixed sample is supplied to the top surface side channel (1M2) from the mixing chamber section (M) 13 through the bottom surface side channel (2M) and the through-path (3M). The mixed sample is further discharged from the top surface side channel (1M2) to the detection section (D) 19, and is supplied to the detection section (D) 19 for detecting the target nucleic acid. This detection section (D) 19 is incorporated into the cassette main body 1 and is fixed thereto.

The detection section (D) 19 communicates with a wash solution chamber section (B) 14 for supplying a wash solution to the detection section (D) 19, and an intercalating agent chamber section (I) 15a for supplying an intercalating agent to the detection section (D) 19. When the pressure inside the wash solution chamber section (B) 14 is increased, the wash solution inside the wash solution chamber section (B) 14 is supplied to the top surface side channel (1B2) through the bottom surface side channel (2B), and the through-hole (3B), then is discharged from the top surface side channel (1B2) to the detection section (D) 19, and is supplied to the detection section (D) 19. Likewise, when the pressure inside the intercalating agent chamber section (I) 15a is increased, the intercalating agent inside the intercalating agent chamber section (I) 15a is supplied to the through-hole (3I) through the bottom surface side channel (2I), is then discharged from the top surface side channel (1I2), and is supplied to the detection section (D) 19. The intercalating agent chamber section (I) 15a and the wash solution chamber section (B) 14 are connected to the valve section (I) 15b and the valve section (B) 17c, respectively, and are selectively made to communicate with the pump section (P) 16 by the valve section (I) 15b and the valve section (B) 17c. That is, when by closing the sample chamber (S) 11 in the state wherein the valve section (D) 17f is opened, closing the amplification chamber sections (A) 12a to 12c (optional) and the valve section (I) 15b, and opening the valve section (B) 17c, the wash solution chamber section (B) 14 is made to communicate with the pump section (P) 16, and the pump section (P) 16 is operated, the pressure inside the wash solution chamber section (B) 14 is increased, and the wash solution is discharged from the top surface side channel (1B2) and is supplied to the detection section (D) 19. Further, when the valve section (B) 17c is closed and the valve section (I) 15b is opened in the state wherein the valve section (D) 17f is opened, the sample chamber section (S) 11 is closed, the amplification chamber sections (A) 12a to 12c is closed, the intercalating agent chamber section (I) 15a is made to communicate with the pump section (P) 16, and the pump section (P) 16 is operated, the pressure inside the intercalating agent chamber section (I) 15a is increased, and the intercalating agent is discharged from the top surface side channel (1I2) and is supplied to the detection section (D) 19.

The detection section 19 communicates with the waste liquid chamber section (W) 18 through the top surface side channel (1D2) and the valve section (D) 17f. Accordingly, when the valve section (D) 17f is opened, and the air pressure is applied to the channel in the detection section (D) 19, the liquid inside the detection section (D) 19 is discharged into the waste liquid chamber section (W) 18 as a waste liquid. The valve section (S) 17a provided between the sample chamber section (S) 11 and the pump section (P) 16 is connected to the waste liquid chamber section (W) 18 through the bottom surface side channel, through-hole, and the top surface side channel. Incidentally, the sample chamber section (S) 11 is formed as a through-hole in the plate-like cassette main body, a dug-down section 20 which is carved out of the plate-like main body so as to determine the cylindrical side wall surface of the sample chamber section (S) 11 is formed. The dug-down section 20 is particularly formed so as to isolate the sample chamber section (S) 11 from the amplification chamber sections (A) 12a, 12b, and 12c, and the bottom surface side channels (2S) through which the sample chamber section (S) 11 communicates with the amplification chamber sections (A) 12a, 12b, and 12c are formed in the remaining bottom part of the dug-down section 20. When the sample chamber section (S) injected with the nucleic acid sample is heated, the dug-down section 20 prevents the heat from entering the adjacent amplification chamber sections (A) 12a, 12b, and 12c in each of which a reagent or an enzyme is held. Further, it is preferable that the dug-down section 20 is formed at the periphery of the amplification chamber sections (A) 12a, 12b, and 12c. In the preferred structure, when the amplification chamber sections (A) 12a, 12b, and 12c are heated, the dug-down section 20 prevents the heat from entering the mixing chamber (M) 13, wash solution chamber section (B) 14, intercalating agent chamber section (I) 15a, and detection section (D) 19. From a viewpoint of thermal conduction, it is desirable that the thickness of the walls constituting the sample chamber section (S) 11 and the amplification chamber section (A) 12a, 12b, and 12c be as thin as possible within the range in which the mechanical strength can be maintained. The thickness of the wall is set at, for example, 2 mm or less, more desirably, 1 mm or less.

The detection section (D) 19 is provided with, for example, a DNA chip (not shown). The DNA chip may be of a current detection type or a fluorescence detection type. In the case of a DNA chip of the current detection type, as is known through Japanese Patent No. 2573443, the chip is provided with a nucleic acid detection substrate for the hybridization reaction, and the nucleic acid detection reaction attached thereto. Gold (Au) individual electrodes are arranged on the substrate for nucleic acid detection, and a nucleic acid probe DNA is fixed to each of the Au individual electrodes. In the state where common electrodes such as a counter electrode and a reference electrode are arranged via a detection space (reaction section) in which probe DNAs are arranged, and the detection space is filled with the intercalating agent, a voltage is applied across the common electrodes and the individual electrodes, and the fact that a current flows through the individual electrode is detected, whereby the target DNA is identified. Needless to say, the DNA chip also includes a closed structure, channels are formed on the substrate of the DNA chip, and a port communicating with the sample chamber section (S) 11, wash solution chamber section (B) 14, and intercalating agent chamber section (I) 15a is provided therein. In the channels in the DNA chip, the individual electrodes and the common electrodes are arranged, and the liquid is transferred on the individual electrodes and the common electrodes. Wiring of the DNA chip is connected to the individual electrodes and the common electrodes, and is further connected to electrode pads (not shown). The electrode pads are arranged such that they are exposed on the nucleic acid detecting cassette 100 and, at the time of current detection, are connected to the electrode connector on the nucleic acid detecting apparatus.

In the present specification, the detailed description of the DNA chip is omitted. Regarding a further detailed description of the DNA chip, see USP 5,776,672 patented on July 7, 1998, and USP 5,972,692 patented on October 26, 1999 (in both patents, the inventor is Koji Hashimoto et. al and the assignee is Kabushiki Kaisha Toshiba), as well as the corresponding Japanese Patent 2573443. The descriptions in the specifications of the U.S. Patents constitute a part of the present specification.

Furthermore, as for the apparatus for measuring a DNA chip of the current detection type, refer to Japanese Patent Application No. 2002-223393 or Japanese Patent Application No. 2003-200440.

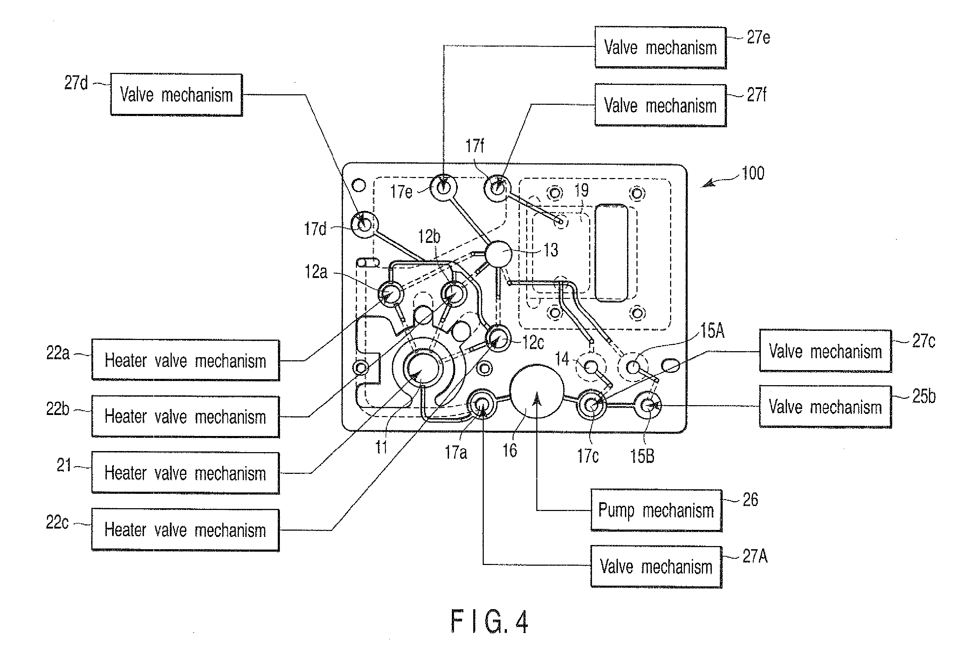

After the nucleic acid detecting cassette 100 is installed in the nucleic acid detecting apparatus, a sample pre-treatment and testing are executed in accordance with a procedure to be described later. The nucleic acid detecting apparatus is provided with driving mechanisms corresponding to the respective sections of the nucleic acid detecting cassette 100 as shown in FIG. 4. That is, the nucleic acid detecting apparatus is provided with a pump mechanism 26 corresponding to the pump section 16. As already described previously, the pump section 16 is constituted of the through-hole or the recess formed in the plate member 1 and flexible members 2 and 3 covering the through-hole or the recess. The pump mechanism 16, which operates the pump section 16, is realized as a press mechanism that presses the flexible films. The nucleic acid detecting apparatus is provided with valve mechanisms 27a, 25b, 27c, 27d, 27e, and 27f corresponding to valves 17a, 15b, 17c, 17d, 17e, and 17f. The valves 17a, 15b, 17c, 17d, 17e, and 17f are constituted of the recesses or the through-holes formed in the plate member 1 and the flexible members 2 and 3 covering the recesses or the through-holes. The valve mechanisms 17a, 15b, 17c, 17d, 17e, and 17f which control opening and closing of the valves 17a, 15b, 17c, 17d, 17e, and 17f are realized as press mechanisms which presses the flexible members 2 and 3 against the inside of the recesses or the through-holes to close the channels and which separates the flexible members 2 and 3 from the inside of the recesses or the through-holes to open the channels. The sample chamber 11 and amplification chambers 12a, 12b, and 12c are constituted of the through-holes and the flexible members 2 and 3, closing the through-holes. Pressing the flexible members 2 and 3 against the through-holes allows the channels communicating with the through-holes to be closed. Separating the flexible members 2 and 3 from the through-holes allows the channels to be opened. The nucleic acid detecting apparatus further heats the sample in the sample chamber 11 and amplification chambers 12a, 12b, and 12c during the pre-treatment step. The nucleic acid detecting apparatus therefore comprises heater valve mechanisms 21, 22a, 22b, and 22c as push mechanisms which operate the sample chamber 11 and amplification chambers 12a, 12b, and 12c as valves corresponding to them and which includes heaters for heating the sample in the sample chamber 11 and amplification chambers 12a, 12b, and 12c.

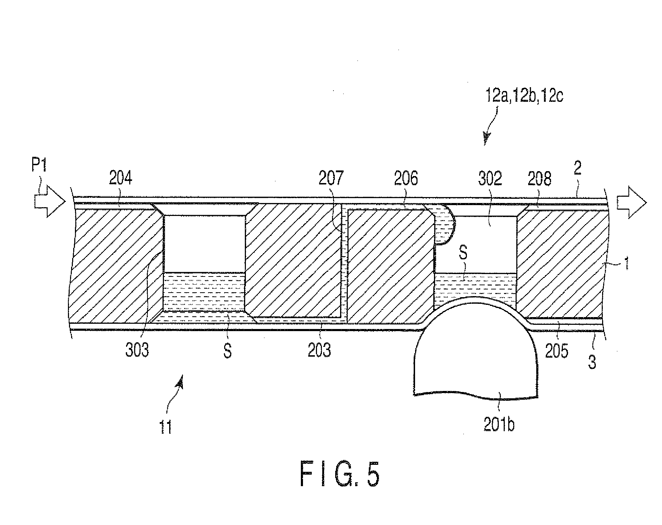

More specifically, the sample chamber 11 and amplification chambers 12a, 12b, and 12c have such a structure as shown in FIG. 5 and are heated by heads of heater valve mechanisms 21, 22a, 22b, and 22c, respectively. In the sample chamber 11 and amplification chambers 12a, 12b, and 12c, the opening section of each of the through-holes 303 and 302 formed in the rigid plate member, that is, the main body 1 is tapered so that a head 201b can be fitted into the opening section. Channels 204, 206, and 208 are formed between the top surface side of the plate member, that is, the main body 1 and the flexible member 2. Channels 203 and 205 are formed between the bottom surface side of the main body 1 and the flexible member 3. Further, a through-channel 207 is formed in the plate member to allow the top surface side channel 206 to communicate with the bottom surface side channel 203.

FIG. 5 shows a case where a sample S is transferred from the sample chamber 11 to the amplification chambers 12a, 12b, and 12c. FIG. 5 representatively shows a case where the sample S is transferred to the amplification chamber 12a. The transfer of the sample to the amplification chambers 12b and 12c is also performed by using a similar mechanism. First, in a state where the sample S is stored in the sample chamber 11, a heater valve mechanism 21 is operated to cause the heads to press the flexible members 2 and 3 against the opening sections of the through-hole 303 to close all the channels 204 and 203, which communicate with the sample chamber 11. Then, to transfer the sample S from the sample chamber 11 to the amplification chamber 12a, in the heater valve mechanism 22a of the amplification chamber 12a which is the transfer destination, only the bottom surface side heater valve mechanism is operated to cause the head 201 to press the flexible member 3 against the opening section of the through-hole 302 to close the channel 205. Subsequently, the upper and lower heads of the heater valve mechanism 21 pressing the flexible members 2 and 3 against the opening sections of the through-hole 303 in the sample chamber 11 are both released to open both the top surface side channel 204 and bottom surface side channel 203 which communicate with the sample chamber 11. Moreover, in this state, the pump section 16 is operated to apply pressure to the sample chamber 11 via the channel 204, whereby the sample S flows into the amplification chamber 12a through the bottom surface side channel 203, through-channel 207, and top surface side channel 206. Since the amplification chambers 12b and 12c have a very similar structure, the sample S is fed to the amplification chambers 12b and 12c by using a similar configuration. Incidentally, when the sample S is fed to the amplification chambers 12a, 12b, and 12c, since the top surface side channel 208 is secured, the pressure applied to and the gaseous body present in the amplification chambers 12a, 12b, and 12c are discharged into the waste liquid chamber 18 via the channel 208 together with the sample S. Only the sample S which is a liquid is fed to the inside of the amplification chamber 12a by gravity. When a predetermined amount of the sample S is fed to the amplification chamber 12a, the top surface side heater valve mechanism 22a is also operated to cause a head 201a to close the top surface side channels 206 and 208 of the amplification chamber 12a. The amplification chamber 12a is thus brought into a closed state. The heater (not shown) of the heater valve mechanism 22a is subsequently energized to allow the head to heat the sample S up to a predetermined temperature.

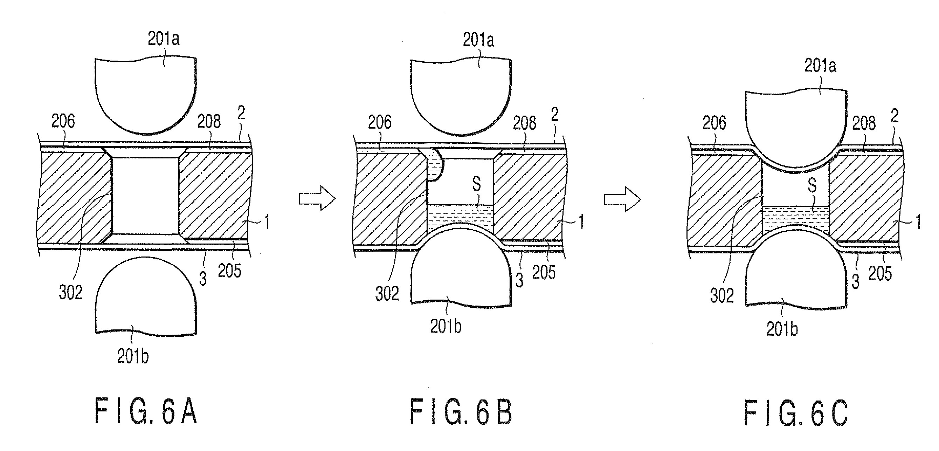

FIGS. 6A to 6C show a procedure of feeding a sample solution from the sample chamber 11 to the amplification chamber 12a, 12b, or 12c. In FIGS. 6A to 6C, the same parts as those shown in FIG. 5 are denoted by the same reference symbols and a description of them will be omitted.

In the amplification chamber 12a, 12b, or 12c shown in FIGS. 6A to 6C, the top surface side and bottom surface side opening sections of a through-hole 302 are tapered so that heads 201a and 210b can be fitted in the opening sections. As shown in FIG. 6A, heads 201a and 201b are arranged at the respective opening sections so as to be opposed to each other.

In the amplification chambers 12a, 12b, and 12c, as shown in FIG. 6B, with the heaters (not shown) kept deenergized, heater valve mechanisms 22a, 22b, and 22c are operated to cause the head 201b to press the flexible member 3 against the opening section of the through-hole 302 to block the channel 205. With the channel 205 blocked, the sample S is fed to the amplification chambers 12a, 12b, and 12c. When a predetermined amount of the sample S is fed to the amplification chambers 12a, 12b, and 12c, as shown in FIG. 6C, valve mechanisms 22a, 22b, and 22c are operated to cause the head 201a to press the flexible member 2 against the opening section of the through-hole 302 to block the channels 206 and 208. The heaters (not shown) of the heater valve mechanisms 22a, 22b, and 22c are subsequently energized to cause the heads 201a and 201b to heat the sample S up to a predetermined temperature. In the structure shown in FIGS. 6A to 6C, there is the possibility of the sample being evaporated when the sample S is heated. However, the evaporated sample is trapped in the amplification chambers 12a, 12b, and 12c, and hence the adverse influence of the evaporated sample can be prevented. After the heating, the heads 201a and 201b leave the through-hole 302 to feed the sample S to the mixing chamber 13 via the channel 205. In particular, providing the heater with the sealing function as described above enables a reduction in the size of the cassette. Furthermore, the chambers are sandwiched from above and below the nucleic acid detecting cassette 100, allowing heat to be uniformly distributed in the chambers. This makes it possible to prevent a liquid resulting from dew condensation from remaining in the chambers.

In FIGS. 5, and 6A to 6C, the procedure of delivering the sample S from the sample chamber 11 to the amplification chambers 12a, 12b, and 12c has been described as an example. However, the procedure is not limited to the amplification chambers 12a to 12c. It is obvious that, when other chambers are used to control the liquid, these chambers may have a similar structure and the liquid may similarly be controlled.

The mixing chamber 13 may also have, as in the case of the amplification chamber 12, a cassette structure or apparatus structure in which the chamber bottom surface is constituted of a flexible member, and may perform a cassette operation of closing the bottom surface side channels, thereafter supplying the sample solution to the mixing chamber 13 and, when the sample solution is supplied from the mixing chamber 13 to the detection section 19, opening the bottom surface side channels of the mixing chamber to move the sample solution.

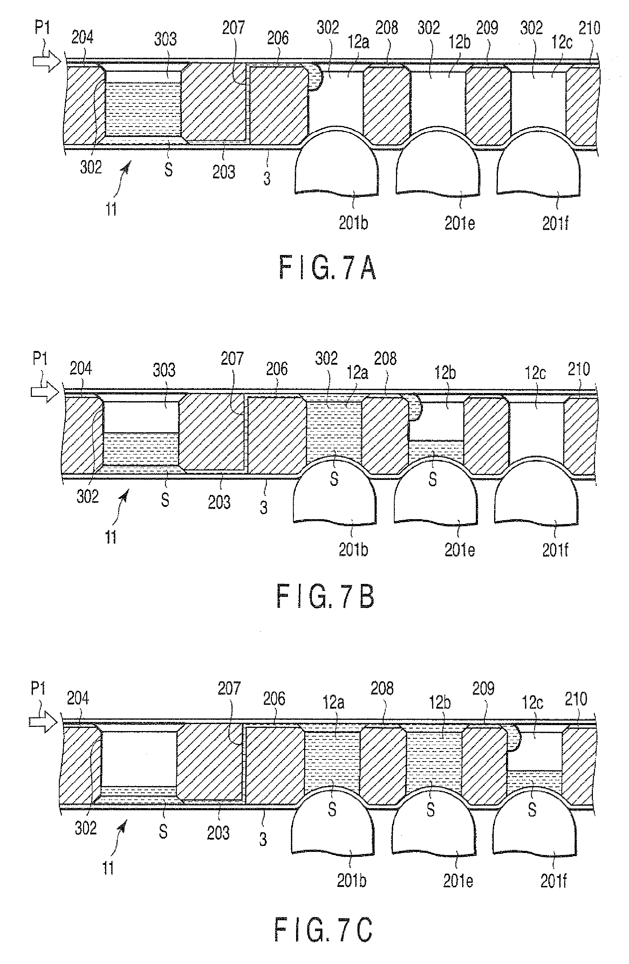

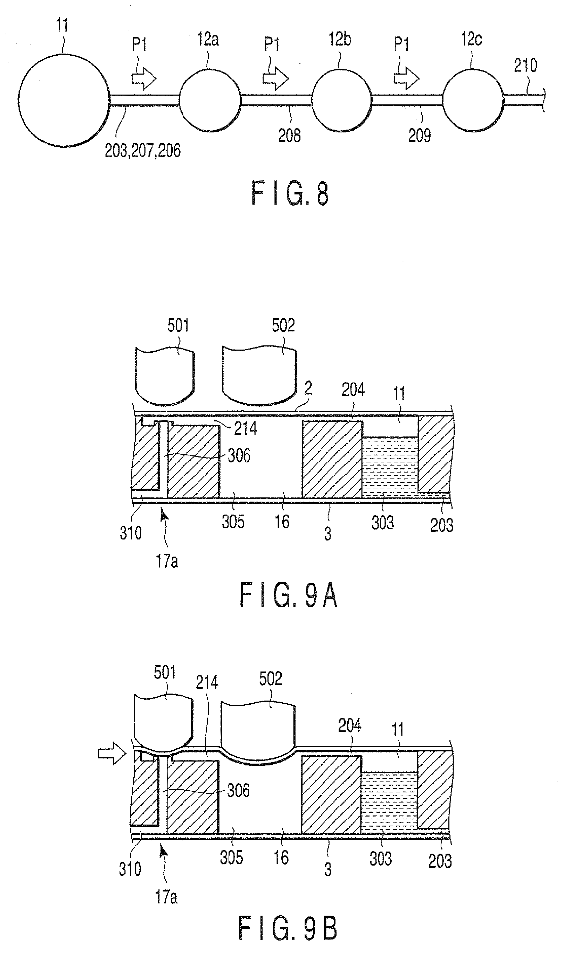

In the structure shown in FIGS. 2 to 4, the amplification chambers 12a, 12b, and 12c are connected to the sample chamber 11 in parallel with each other by the radially extending channels. As described above by referring to FIGS. 5 and 6A to 6C, pressure is applied to the sample chamber 11 to thereby divide the sample S into three parts so that a uniform amount of the sample S can be fed to each of the amplification chambers 12a, 12b, and 12c. In this case, it is desirable that the resistance of the channel offered via the amplification chamber 12a, the resistance of the channel offered via the amplification chamber 12b, and the resistance of the channel offered via the amplification,chamber 12c is equal to one another. For example, this can be realized by making the channel lengths of the amplification chambers 12a, 12b, and 12c equal to one another if the channel cross-sectional areas of the amplification chambers 12a, 12b, and 12c are equal to one another. Instead of being connected to the sample chamber 11 in parallel with one another, the amplification chambers 12a, 12b, and 12c may be connected in series to the sample chamber 11 as shown in FIGS. 7A to 7C, and 8. In such a connection as shown in FIG. 8, when the solution collected in the sample chamber 11 is delivered by the above-mentioned delivery method, the solution can be uniformly distributed by delivering the solution at an appropriate flow rate even if the inter-chamber channels 203, 207, 206, 208, 209, and 210 do not have the same length or channel cross-sectional shape.

Incidentally, in FIGS. 7A to 7C, the same parts as those in FIGS. 5, and 6A to 6C are denoted by the same reference symbols and a description of them will be omitted. FIG. 8 schematically shows the connective relationship between the chambers and channels shown in FIGS. 7A to 7C.

In the structure of the nucleic acid detecting cassette 100 shown in FIGS. 7A to 7C, the sample chamber 11 communicates with only the top surface side channel 204 and the bottom surface side channel 203 communicated with the amplification chamber 12a. On the top surface side, no other channel communicates with the sample chamber 11. Furthermore, the bottom surface side channels (not shown) of the amplification chambers 12a, 12b, and 12c communicate with the mixing chamber 13. When the sample S is fed from the sample chamber to the amplification chamber, in FIGS. 7A to 7C, it is assumed that the bottom surface side channels (not shown) are closed by the flexible member 3 pressed by heads 201b, 201e, and 201f. The amplification chamber 12a communicates with the sample chamber 11 and the amplification chamber 12b via the top surface side channels 206 and 208. The amplification chamber 12b communicates with the amplification chambers 12a and 12c via the top surface side channels 208 and 209. The amplification chamber 12c communicates with the amplification chamber 12b and the waste liquid chamber 18 via the top surface side channels 209 and 210. Assuming that the volume of the sample that can be stored in each of the amplification chambers 12a, 12b, and 12c in the state where the heads 201b, 201e, and 201f pressing the flexible member 3 against the opening sections of the through-holes 302 is defined as Va, it is specified that the volume Vs of the sample to be stored in the sample chamber 11 is equal to 3Va or larger (Vs≥3Va). Specifying the above allows the amplification chamber 12a to be filled with the sample S from the sample chamber 11. The amplification chamber 12b is filled with a part of the sample S overflowing the amplification chamber 12a. The amplification chamber 12c is also filled with a part of the sample S further overflowing the amplification chamber 12b. Thus, an almost uniform amount of the sample S can be distributed to the amplification chambers 12a, 12b, and 12c. Therefore, in this case, the amount of the sample filled into each of the amplification chambers is determined by the volume of the amplification chamber. Here, an example is shown in which all the amplification chambers have the same volume. However, if there is a request to change the amount of the liquid to be amplified, it is possible to cope with the request by appropriately changing the volume of each amplification chamber. The basic cassette configuration need not be changed.

In the structure shown in FIGS. 7A to 7C, the sample S initially stored in the sample chamber 11 is fed to the first amplification chamber 12a via the channels 203, 207, and 206 by the pressure P1 as shown in FIG. 7A. As shown in FIG. 7B, when the first amplification chamber 12a is filled with the sample S fed to the chamber 12a, the sample S is further fed from the first amplification chamber 12a to the second amplification chamber 12b via the channel 208 by the pressure P1. Moreover, as shown in FIG. 7C, when the second amplification chamber 12b is filled with the sample S fed to the chamber 12b, the sample S is further fed from the second amplification chamber 12b to the third amplification chamber 12c via the channel 209 by the pressure P1. Filling the third amplification chamber 12c with the sample S allows the sample S to be distributed to all the amplification chambers 12a, 12b, and 12c. Incidentally, when the sample S is fed from the sample chamber 11 to the amplification chambers 12a, 12b, and 12c, since the top surface side channel 210 that communicates with the waste liquid chamber 18 is secured, the pressure applied to and the gaseous body present in the amplification chambers 12a, 12b, and 12c are discharged into the waste liquid chamber 18 via the channel 210 together with the overflowed sample S. Only the sample S, which is a liquid, is fed to the inside of the amplification chambers 12a, 12b, and 12c owing to gravity.

In the structure shown in FIGS. 1 to 8, when the sample, the wash solution, or the intercalating agent is fed from the sample chamber 11, the wash solution chamber 14, or the intercalating agent chamber 15a, respectively, is fed to another chamber, the sample, the solution, or the agent always flows out of the bottom surface side channel and is fed through the top surface side channel. This prevents the sample, the wash solution, and the intercalating agent from being easily moved in the cassette structure. Even if the cassette structure is tilted during cassette transportation or the like, the liquid can be prevented from moving unless pressure is exerted on the chambers.

FIGS. 9A and 9B show one example of the structure of the pump section 16 and the pump mechanism 26. With reference to FIGS. 9A and 9B, a description will be given of an operation of delivering a liquid from the sample chamber 11 to the channel 203 in connection with the pump section 16 communicating with the sample chamber 11. For simplification of description, FIGS. 9A and 9B are development view of the sample chamber (S) 11, the pump section 16, and valve 17a. The valve 17a switches between opening and closing the path between the pump section 16 and the channel from the waste chamber 18. Likewise, in the pump section 16, a through-hole or a recess 305 is formed and defined in the main body 1. The pump section 16 communicates with the sample chamber 11 via the top surface side channel 204. The pump section 16 further communicates with the valve section 17a constituted of a through-channel 306 via the top surface side channel 214. The valve section 17a communicates with the waste liquid chamber 18 via the bottom surface side channel 310. A pump pusher 502 of the pump mechanism 26 is located opposite to the pump section 16. Further, a valve pusher 501 is located opposite to the valve section 17a.

In the structure shown in FIG. 9A, when the valve pusher 501 presses the flexible member 2 against the opening section of the through-channel 306, the opening section of the through-channel 306 is closed by the flexible member 2 as shown in FIG. 9B. In this state, when the pump pusher 501 presses the sheet member 2, the pressure and the gaseous body inside the pump section 16 are fed into the sample chamber 11 through the top surface side channel 204. The sample S in the sample chamber 11 is therefore pushed out to the bottom surface side channel 203 and discharged from the sample chamber 11. Then, as shown in FIG. 9A, the valve pusher 501 is returned to open the opening section of the through-channel 306. The pump pressure 502 is then returned. This allows the gaseous body to flow into the pump section 16 via the bottom surface side channel 310. When the valve pusher 501 and the pump pusher 502 are repeatedly operated as described above, the sample S is continuously fed out of the sample chamber 11, and the pressurizing gaseous body also flows into the pump section 16.

A condition for allowing the pump section 16 to function is that a pressure loss on the suction side (channel 310 side) be smaller than that on the ejection side (channel 204/samples chamber 11 side). Accordingly, the air inlet channel 310 preferably has a greater channel cross-sectional area than the air outlet channel 204.

As described above, the sample S, the wash solution, and the intercalating agent are separated from one another via air (gaseous body) in the channel and moved through the channel by applying pressure to the air (gaseous body) by means of the pump section 16. As will be described later, appropriately controlling the valves enables the sample S, the wash solution, and the intercalating agent to move individually through the channel. As a result, this allows an appropriate reaction to occur in the detection section 19.

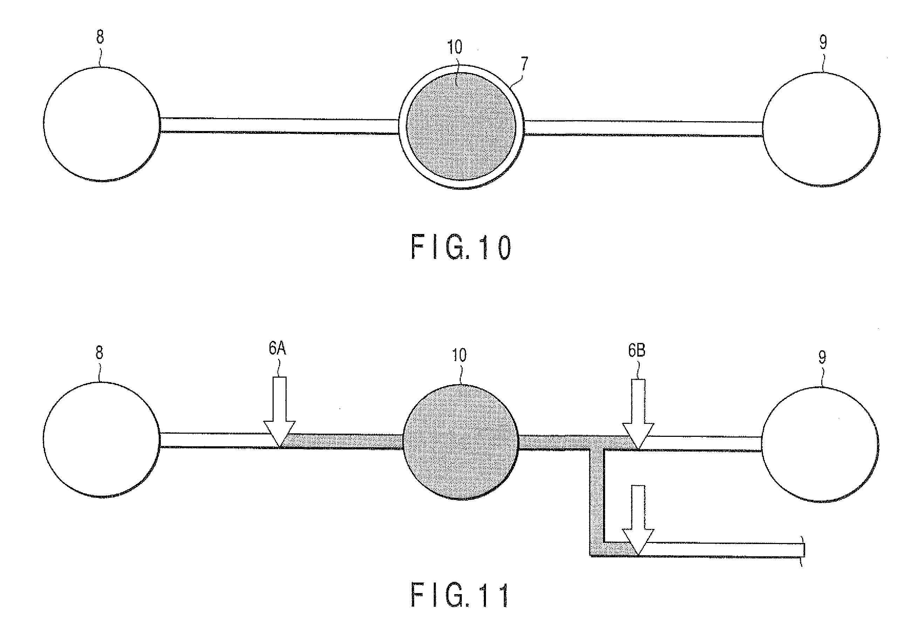

Furthermore, in the nucleic acid detecting cassette 100 described above, a reaction chamber 10 such as amplification chambers 12a, 12b, and 12c and the sample chamber (S) 11 in which the temperature is heat-controlled is thermally isolated from the adjacent chambers 8 and 9 by valve mechanisms 21, and 22a to 22c by blocking the corresponding channel as shown in FIG. 10. That is, the valve 7 is constituted of the heads of the valve mechanisms 21, and 22a to 22c, and the flexible members 2 and 3. The heads press the flexible members 2 and 3 against the channels to isolate the reaction chamber 10. This makes it possible to prevent the sample from evaporating and leaking from the reaction chamber 10. More specifically, when the inside of the reaction chamber 10 is heated, the reaction chamber 10 is sandwiched between the upper and lower heads. The top and bottom surfaces of the reaction chamber 10 are tapered, and each of the heads is formed like a projection. The flexible members 2 and 3 are pressed against the reaction chamber 10 to close the reaction chamber 10. This structure enables heating of the inside of the reaction chamber 10 and closure of the reaction chamber 10 to be simultaneously realized.

FIG. 11 schematically shows Comparative Example 1 in contrast to the structure shown in FIG. 10. In Comparative Example 1 shown in FIG. 11, valves 6A and 6B are provided separately from the reaction chamber 10 as a temperature control area. Only the reaction chamber 10 is controllably heated. In Comparative Example 1, a reactant may evaporate and flow out to the channels between the reaction chamber 10 and the valves 6A and 6B. Condensation may occur in the channel and the reactant may flow out of the reaction chamber 10. Furthermore, if the reactant comes in contact with the outflow channel from the chamber, the reactant may flow along the channel and may flow out of the reaction chamber because of a capillary phenomenon.

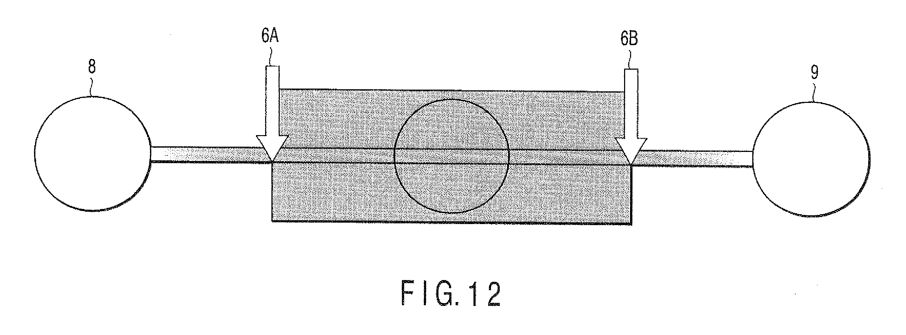

FIG. 12 also schematically shows Comparative Example 2 in contrast to the structure shown in FIG. 10. In Comparative Example 2, shown in FIG. 12, valves 6A and 6B are provided separately from the reaction chamber 10. To prevent possible condensation as in the case of Comparative Example 1, the reaction chamber 10 as a temperature control area and the channels between the reaction chamber 10 and valves 6A and 6B are controllably heated. In Comparative Example 2, in which the temperature control range is extended to the valves 6A and 6B, heat may be transferred to the adjacent chambers 8 and 9 to cause an undesired reaction in the adjacent chambers 8 and 9.

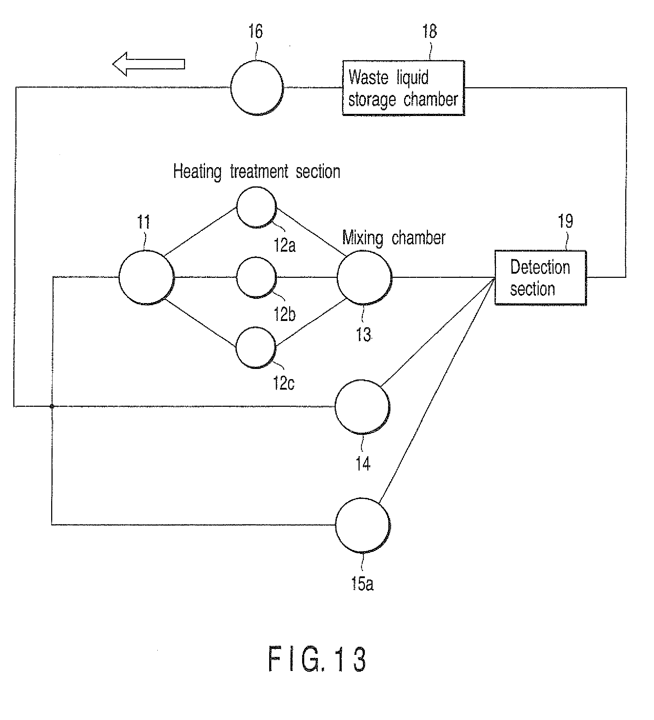

FIG. 13 shows the chambers 11, 12a, 12b, 12c, 13, 14, and 15a, the pump 16, and the detection section 19 as well as the channels connecting the chambers 11, 12a, 12b, 12c, 13, 14, and 15a, the pump 16, and the detection section 19 to one another, all the components being included in the nucleic acid detecting cassette 100 shown in FIGS. 1 to 4. Incidentally, for simplification, the valves and the like which control the channels are not shown.

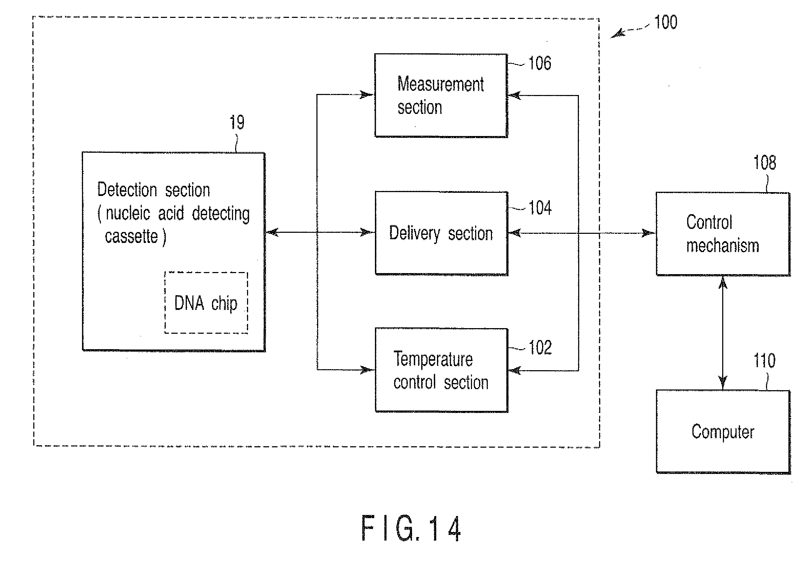

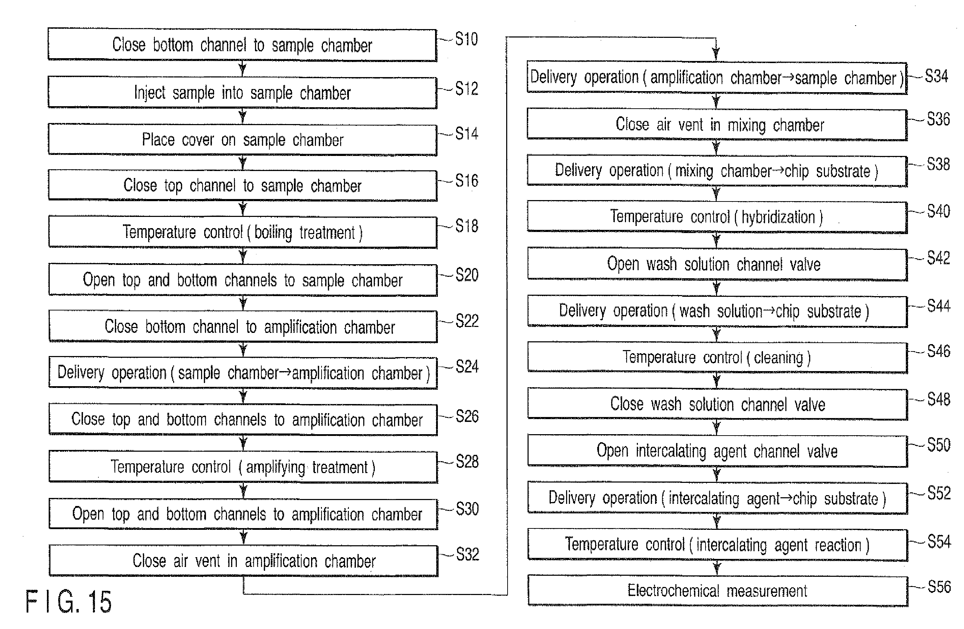

Further, FIG. 14 shows a block diagram of the detecting apparatus for controlling the nucleic acid detecting cassette 100 shown in FIG. 13. Further, FIG. 15 shows a flowchart showing a procedure of controlling the nucleic acid detecting cassette 100 by means of the control system shown in FIG. 14 to detect a nucleic acid.

As shown in FIG. 14, the nucleic acid detecting apparatus (measurement unit) comprises a temperature control section 102 which measures the temperatures of the sample chamber, the amplification chambers, and the detection section and which provides the outputs of the heaters incorporated in the heater valve mechanisms 21, 22a, 22b, and 22c with feedback temperature information to control the temperatures to desired values, and a liquid delivery control section 104 for controlling delivery of a liquid such as the sample S or the like in the channels. The liquid delivery control section 104 includes the already described pump section 16, pump mechanism 26, and heater valve mechanisms 21, 22a, 22b, and 22c and valve mechanisms 27a, 25b, 27c, 27d, 27e and 27f. The nucleic acid detecting apparatus further comprises the detection section 19 and a measurement section 106 that measures reactions occurring in DNA chips. The measurement section 106 utilizes an electric contact connector shown in FIG. 1 to detect a detection signal from an electric contact pad to determine the energized electrode. The nucleic acid is thus identified. The temperature control section 102, the liquid delivery control section 104, and the measurement section 106 are controlled by a control mechanism 108 controlled by a computer unit 110.

In the nucleic acid detecting apparatus described above, detection of a nucleic acid is performed in accordance with the procedure shown in FIG. 15 as follows.

When the nucleic acid detecting cassette 100 is provided to a user, the sample chamber 11 is not closed, and an opening section (sample injecting port) 404 in the chamber 11 is openable. In the nucleic acid detecting cassette 100 provided in this state, the bottom surface side channel of the sample chamber 11 is first closed (step S10). Then, the sample S is injected into the sample chamber 11 through a top opening section of the sample chamber 11 (step S12). The top opening section of the sample chamber 11 is subsequently closed with a cover (or a seal) 402 (step S14). The a head (not shown) of a heater valve mechanism 21 is then pressed against the cover (seal) 402 constituted of a flexible member, and the flexible member 2 integral with, and in tight contact with the opening section. The top surface side channel of the sample chamber S14 is thus closed to confine the sample S in the sample chamber 11 (step S16).

The heater of heater valve mechanism 21 is operated, and the temperature of the heater is controlled such that the sample is boiled at a predetermined temperature (step S18). The sample S is heated at, for example, 95°C for five minutes, whereby a nucleic acid is extracted from the sample. Then, the head (not shown) of the heater valve mechanism 21 is separated from the flexible members 2 and 3 to open the bottom surface side channel communicating with the sample chamber 11 (step S20). Furthermore, the lower heads of the heater valve mechanisms 22a, 22b, and 22c press the flexible member 3 against the bottom surface side opening sections of the amplification chambers 12a, 12b, and 12c to close the bottom surface side channels communicating with amplification chambers 12a, 12b, and 12c. The pump 26 is subsequently operated to exert an air pressure on the sample chamber 11 with the valve 17d in an open state and the valves 15b and 17c in a closed state. Consequently, the sample S is fed from the sample chamber 11 to the amplification chambers 12a, 12b, and 12c via the corresponding bottom surface side channels, through-channels, and top surface side channels (step S24).

Moreover, the upper heads of the heater valve mechanisms 22a, 22b, and 22c are pressed against the opening sections the amplification chambers 12a, 12b, and 12c, respectively, from above, to bring the amplification chambers 12a, 12b, and 12c into a closed state. In this state, the heaters of the heater valve mechanisms 22a, 22b, and 22c are operated, and the amplification chambers 12a, 12b, and 12c are heated with the temperatures of the heaters controlled. Accordingly, the samples S in the amplification chambers 12a, 12b, and 12c are heated to amplify DNAs (step S28). For example, the sample S is heated at 65°C for 60 minutes, thereby amplifying the nucleic acid in the sample S. The heads of the heater valve mechanisms 22a, 22b, and 22c are subsequently separated from the upper and lower opening sections of the amplification chambers 12a, 12b, and 12c to open the channels on the top surface side and the bottom surface side of each of the amplification chambers 12a, 12b, and 12c (step S30). Then, the valve mechanism 27d presses the valve 17d to block a path leading to the waste liquid chamber 18 via the top surface side channel serving as an air vent port (step S32). When the pump 26 is then operated with the valve 17e in an open state, the air pressure is exerted on the amplification chambers 12a, 12b, and 12c, and the samples S in the amplification chambers 12a, 12b, and 12c are fed to the mixing chamber 13 via the corresponding bottom surface side channels, through-holes, and the top surface side channels (step S34). When the pump 26 is operated in a state where the valve 17e is closed, the top surface side channel serving as an air vent port of the mixing chamber 13 is closed with the valve 17f in an open state (step S36), the air pressure is exerted on the mixing chamber 13, and the sample S is supplied from the mixing chamber 13 to the DNA chip substrate of the detection section 19 via the corresponding bottom surface side channel, through-channel, and top surface side channel (step S38). The DNA chip substrate in the detection section 19 is heated in a state where the temperature of the substrate is controlled, thereby causing hybridization in the substrate. That is, in the DNA chip in a state where the temperature thereof is controlled, a target DNA is hybridized with a probe DNA (hybridization).

Thereafter, the valve 17c is opened, whereby the channel leading from the pump section to the wash solution chamber 14, and further to the DNA chip substrate is opened. In this state, the valves 17a and 15b are closed and the sample chamber 11 is in a closed state (step S42). In this state, when the pump 26 is operated, the air pressure is exerted on the wash solution chamber 14, and the wash solution is supplied to the DNA chip substrate in the detection section 19 (step S44). Thus, the sample S in the DNA chip substrate in the detection section 19 is fed to the waste liquid chamber 18 via the valve 17f. Furthermore, the fed wash solution is used to wash away an unnecessary DNA sample (which does not contribute to hybridization) on the DNA chip substrate in the detection section 19. During the washing, the temperature of the DNA chip substrate in the detection section 19 is controlled, and hence the DNA chip substrate is washed with the wash solution kept at a predetermined temperature (step S46). That is, in the DNA chip maintained at the predetermined temperature, DNAs other than the target DNA having a sequence complementary to that of the probe DNA are washed away with the wash solution.

The wash solution valve 17c is closed and the valve 15b is opened, whereby the path for communicating with the wash solution chamber 14 is switched to the path for feeding the intercalating agent. The pump 26 is then operated to exert the air pressure on the intercalating agent chamber 15a, thereby feeding the intercalating agent to the DNA chip substrate in the detection section 19 (step S52). When the intercalating agent is fed to the DNA chip substrate, the wash solution in the DNA chip substrate in the detection section 19 is discharged into the waste liquid chamber 18 via the valve 17f. When the temperature of the detection section 19 is controlled, and the intercalating agent is maintained at a predetermined temperature, the intercalating agent is bonded to hybridized DNA on the DNA chip substrate (step S54). With the intercalating agent injected into the DNA chip substrate, a voltage is applied across the counter electrode and the individual electrodes to cause the intercalating agent to produce an oxidation reduction reaction. A current incidental to the reaction is detected by any one of the individual electrodes, which is identified as the electrode involved in the hybridization reaction (step S56). The base sequence of the probe DNA on the DNA chip is known, and hence the base sequence of the target DNA can be determined by determining the individual electrode at which the oxidation reduction current has been detected. That is, it is ascertained that the base sequence of the detection target region of the target DNA is complementary to the sequence of the probe DNA on the current detection electrode at which the current has been detected.

The nucleic acid detecting cassette and the nucleic acid detecting apparatus according to the embodiment of the present invention have the configuration and structure described above. In the above, the case where the sample S is heat-treated in the sample chamber 11 is described, however, this is not the only case. If the sample S is not heated in the sample chamber 11, the steps S10, S16, S18 and S20 can be skipped. However, various improvements may be made in the configuration and structure as will be described below.

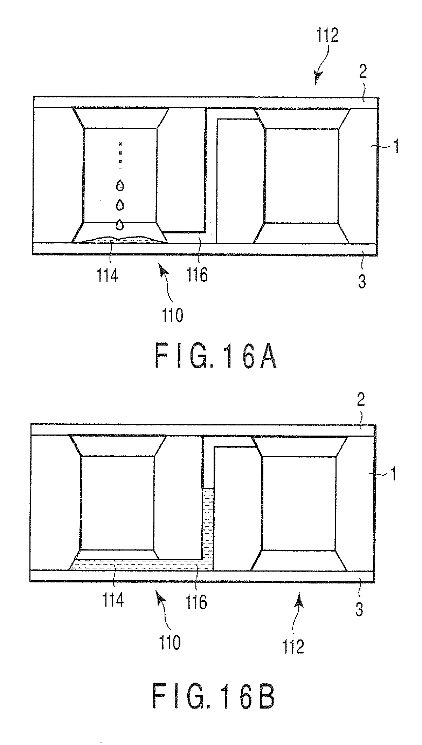

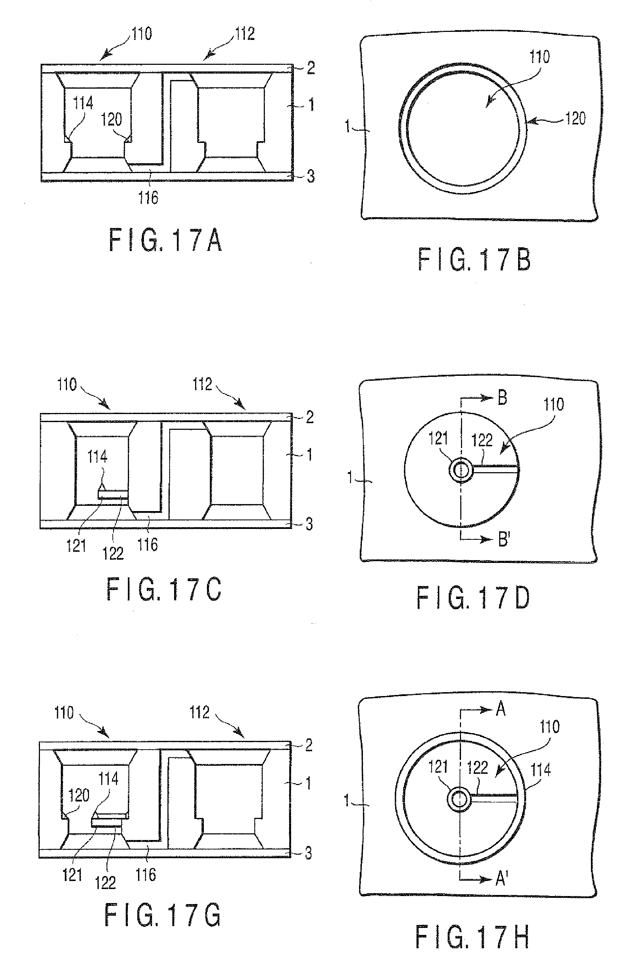

A reagent 114 is prestored in each of the amplification chambers 12a, 12b, and 12c serving as the reaction chamber 110 as shown in FIG. 16A. The channels connected to these reaction chambers have a sufficiently elongated cross-sectional area, and there is the possibility of the liquid reagent 114 flowing out of the chamber 110 through the channel 116 because of a capillary phenomenon. If the liquid reagent 114 can be perfectly dropped to a central part of the reaction chamber 110 so as not to come into contact with the channel, the disadvantageous outflow of the reagent 114 can be prevented. However, as shown in FIG. 16B, when a large amount of the reagent 114 is injected so as to cover the entire bottom surface of the chamber, or even when the amount of the reagent 114 is very small, if the dropping position deviates from the center, and the reagent comes into contact with the bottom surface side channel 116, or if the reagent 114 migrates inside the reaction chamber 110 and comes into contact with the channel 116, then the reagent 114 may disadvantageously flow out. If the reagent 114 disadvantageously flows out, the amount of the reagent remaining in the chamber 114 decreases. Thus, the amount of reagent that can contribute to a reaction treatment such as an amplification reaction may deviate from a predetermined value, thereby adversely affecting reaction stability or reproducibility. However, if the reaction chamber is configured to internally hold the reagent 114 as shown in FIGS. 17A to 17J, the reagent 114 can be prevented from flowing out through the channel 116.

A ring-like step 120 may be formed on a wall surface in the reaction chamber 110 so that the reagent can be dropped onto the step 120 as shown in FIGS. 17A and 17B. In the structure shown in FIG. 17A, the reagent 114 can be held so as to spread along the ring-like step 120 as shown in FIG. 17B. This makes it possible to prevent the reagent 114 from flowing to the adjacent chamber 112 via the channel 116. This structure enables the reagent 114 to be stably held at a part spatially apart from the channel 116 communicating with the reaction chamber 110. The outflow of the reagent 114 can thus be prevented.

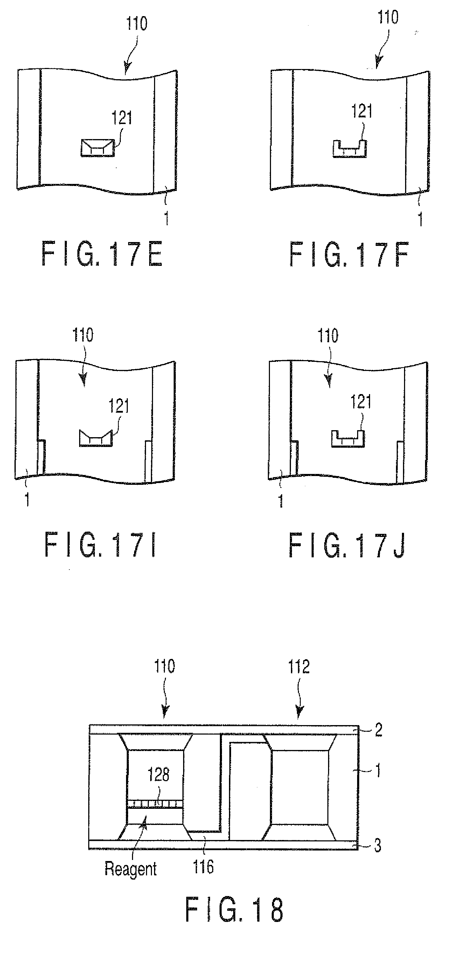

A saucer-like reagent holding area 121 may be formed in a central part of the space in the reaction chamber 110 as shown in FIGS. 17C and 17D. The saucer 121 may be shaped simply like a disk placed on a support arm 122 extending from an inner surface of the reaction chamber 110. However, the saucer 121 is preferably raised at its edge so as to be able to stably hold the reagent 114 as shown in FIG. 17E or 17F. In this case, for a manufacturing reason, it is considered that a bridge-like support arm 122 needs to extend from a sidewall of the reaction chamber 110. Only one support arm may be used as shown in FIG. 17D or a plurality of support arms 122 may be used, provided that the arm 122 can support the saucer 121. However, another solution must flow into the chamber from above, then is mixed with the reagent 114 and, after the reaction treatment, must flow out through the bottom side channel 116. Accordingly, the area of the chamber covered with the saucer 121 and the support arm 122 is preferably at most half the transverse cross-sectional area of the reaction chamber 110.

The structures shown in FIGS. 17A and 17C may be combined with each other so that the ring-like step 120 is formed on the wall surface in the reaction chamber 110 as shown in FIGS. 17G and 17H and so that the saucer-like reagent holding area 121 is formed in the central part of the space in the reaction chamber 110 as shown in FIGS. 17I and 17J. When the amount of the reagent 114 is large, it is conceivable that there may be a case where the required capacity cannot be secured only by the saucer 121. In this case, preferably, the reagent 114 is received on the saucer 121 and flows to the support 122 and the sidewall step 120, where the reagent 114 is also held. Such a structure is desirable since the area for receiving the reagent is increased. To allow the reagent dropped into the saucer 121 to flow to these structures, the support 122 preferably has a groove formed in its upper part thereof. In the structure shown in FIGS. 17C and 17G, a groove may be formed in the upper part of the support 122. Any of these structures may be selected according to the amount of a reagent to be held.

Alternatively, as shown in FIG. 18, a mesh-like lattice 128 may be fixed to the inside of the reaction chamber 110. In this structure, the dropped reagent 114 may be held between the meshes in the mesh-like lattice 128.

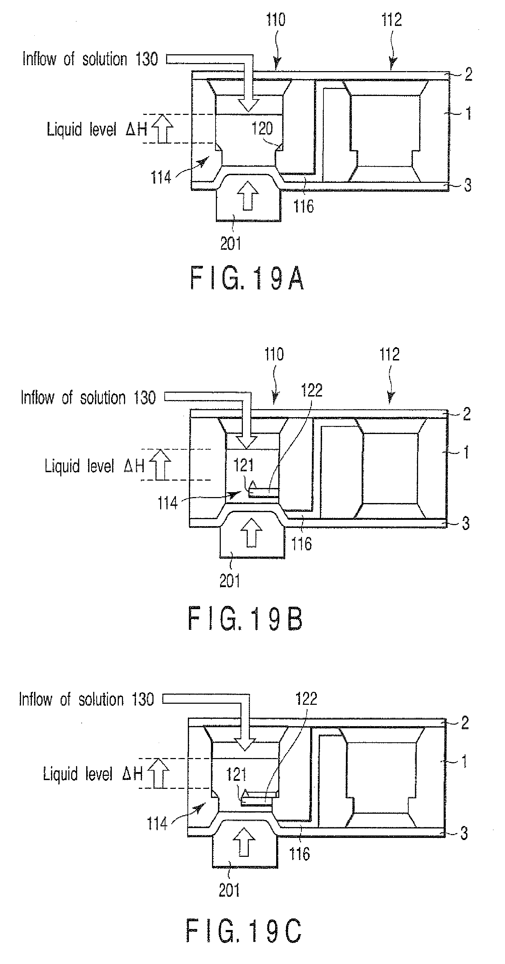

As described above, for example, as for the reagent 114 held in the amplification chambers 12a, 12b, and 12c, a pre-treated sample solution 130 (corresponding to the sample S) needs to flow from the sample chamber 11, i.e., the pre-treatment chamber, into the amplification chambers 12a, 12b, and 12c, where the solution 130 needs to be mixed with the amplification reagent 114, thereby causing an amplification reaction. To achieve this, the reagent 114 and the sample solution 130 need to be mixed with each other when the sample solution 130 flows into the chambers or during a heating treatment for the amplification reaction. Thus, as shown in FIGS. 19A, 19B, and 19C, the final liquid level in each of the chambers which are filled with the sample solution 130 is required to be higher than the position at which the reagent 114 is held.

FIGS. 19A to 19C show the relationship between the liquid levels in the structures shown in FIGS. 17A, 17C, and 17G.

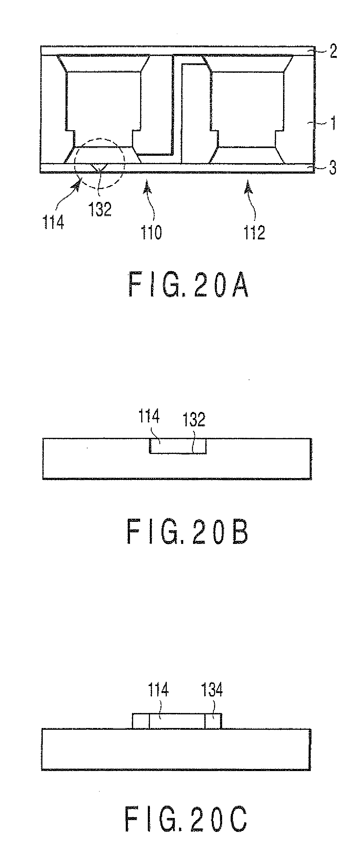

FIGS. 20A to 20C show another structure for holding the reagent 114. In the reagent holding structure shown in FIGS. 20A to 20C, the reagent 114 is held in a recess 132 formed in a part of the flexible member 3 corresponding to the bottom of the chamber 110 as shown in FIG. 20B or in a bank-like enclosure 134 as shown in FIG. 20C. Also in this structure, the recess 132 or the bank-like enclosure 134 is preferably formed in the vicinity of the central part of the reaction chamber 110. In FIGS. 17A to 20C, special structure for holding reagent 114 is described. But it may be possible to hold the reagent 114 in a solid state on the flexible member 3 without any special structures as in FIGS. 17A to 20C.

According to the nucleic acid detecting cassette of the present invention, it is possible to prevent the nucleic acid from leaking out to an external environment, prevent the external mixture of nucleic acids, and automatically execute a process including the nucleic acid amplification and the other required treatments as well as the detection of the target nucleic acid.

Furthermore, the internally prestored reagent is held at the predetermined position, and is prevented from flowing out undesirably. This enables stable reaction treatments and detection to be realized.

Further, when the sample solution is supplied from the sample chamber 11 to the amplification chamber 12, the solution flows into the chamber through the chamber top surface side channel 206 in a state where the chamber bottom surface side channel 205 is closed, and the chamber top surface side channel 208 is secured as shown in FIG. 5. The amount of the reagent prestored in the amplification chamber 12 is relatively minute, and hence by providing the structure for holding the reagent as shown in FIGS. 17A to 17J, 18, and 20A to 20C, it is possible to prevent the solution from undesirably flowing out before the solution is caused to flow out from the amplification chamber.

The reagent is not limited to the case where the reagent is held in a liquid state as described above. The reagent may be introduced into the amplification chamber 12 in a solid state, or may be introduced into the amplification chamber in a liquid state and, thereafter may be held in a solid state through a drying step and the like. In this case, the sample holding structure is not limited to the structure described in FIGS. 17A to 20C.

When the sample solution is moved from the amplification chamber 12 to a next chamber, by operating the pump, and applying the air pressure to the amplification chamber in a state where the chamber bottom surface side channel 205 is opened, the sample solution is moved to the next chamber through the chamber bottom surface side channel 205, thereby making it possible to sufficiently control the movement of the liquid.

However, when the structure for directly closing the chamber bottom surface side channel is not provided as in the case of the wash solution chamber 14 or the intercalating agent chamber 15, there is the possibility of the reagent flowing out of the chamber, like the description of the possibility of the reagent flowing out of the amplification chamber 12 in connection with FIG. 16.

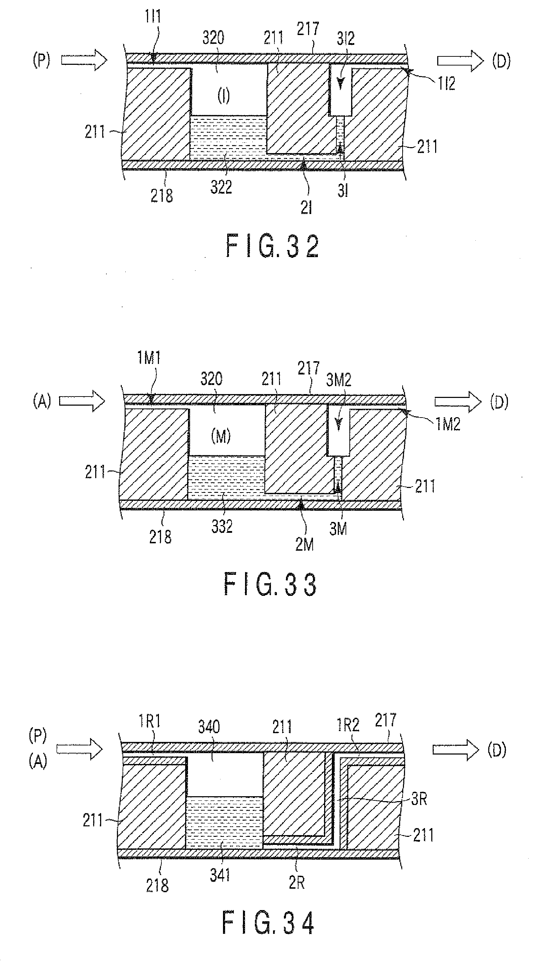

Thus, as shown in FIGS. 31 to 33, by making a part of the outflow path larger, it becomes possible to control the outflow amount to minimize it. This is because the solution which tends to flow out of the chamber by the capillary phenomenon is stopped at the point at which the cross-sectional area changes. FIG. 31 shows the cross section of the wash solution chamber 14, and FIG. 32 shows the cross section of the intercalating agent chamber 15a. In FIGS. 31 and 32, the liquid level of the liquid reagent held in the chamber in advance is schematically shown. Further, while another region in the cassette is operated, even if the pressure in the chamber of interest somewhat varies, since the channel cross-sectional area is partly made larger, the reagent top position is not largely varied, and it is possible to prevent a state where the reagent undesirably reach, for example, the adjacent region from occurring.

Such an effect is also valid for a mixing chamber 13 shown in FIG. 33. That is, as for the mixing chamber 13, both a case where a liquid reagent is held in advance therein, and a case where a solid reagent is held in advance therein can be assumed. Further, not only a case where a structure in which the chamber bottom surface side channel can be directly closed is provided, but also a case where the above structure is not provided can be assumed. When the liquid reagent is held in the mixing chamber 13, the mixing chamber 13 can be regarded as being totally identical with the wash solution chamber 14 and the intercalating agent chamber 15a described previously. In the case where the reagent held in the mixing chamber 13 is in a solid state, and no liquid is initially present in the mixing chamber 13, it is understood that the above-mentioned effect is exerted when the sample solution is supplied from the amplification chamber 12 to the mixing chamber 13. That is, at almost the same instant the liquid is supplied to the mixing chamber 13, the solution flows out of the mixing chamber 13 through the mixing chamber bottom surface side channel by the capillary phenomenon. However, by partly increasing the cross-sectional area of the outflow path, the outflow of the solution due to the capillary phenomenon can be stopped at the point at which the cross-sectional area is changed, and hence it becomes possible to control the outflow of the solution. Further, as in the case of the wash solution chamber 14 and the intercalating agent chamber 15a, while another region in the cassette is operated, even if the pressure in the chamber of interest somewhat varies, it is also possible to expect the effect of maintaining the reagent top position without a large variation.

The liquid holding chambers 310, 320, and 330 shown in FIGS. 31 to 33 correspond to the wash solution chamber 14, the intercalating agent chamber 15a, and the mixing chamber 13, respectively. In the chambers 310 and 320, reagents 312 and 322 are respectively stored. Further, in the chamber 330, a sample solution 332 is held. Through-hole channels 3B, 3I, and 3M are connected to the bottom surface side channels 2B, 21, and 2M, respectively. At this time, the upper side (3B2, 3I2, 3M2) cross-sectional area of each of the through-hole channels 3B, 3I, and 3M is larger than the lower side cross-sectional. Further, the top surface side channels 1B2, 1I2, and 1M2 are respectively connected to the through-hole channels 3B2, 3I2, and 3M2 each having the larger cross-sectional areas. As described above, by increasing the upper side cross-sectional areas of the through-hole channels, it becomes possible to control the outflow amounts of the reagents 312, and 322, and the sample solution 332 to minimize the amounts. For example, by causing the cross sections of 3B, 3I, and 3M to have a diameter of ϕ1 mm, and causing the cross sections of 3B2, 3I2, and 3M2 to have a diameter of ϕ2 mm, the aforementioned effect can be obtained.

Further, as a means for preventing the solution from undesirably flowing out of each of the wash solution chamber 14, the intercalating agent chamber 15a, and the mixing chamber 13, it is desirable that the channels be subjected to a hydrophobic treatment. The liquid holding chamber shown in FIG. 34 corresponds to the wash solution chamber 14, the intercalating agent chamber 15a, or the mixing chamber 13. In FIG. 34, a reagent or a sample 341 is stored in a chamber 340. A top surface side channel 1R1, and a bottom surface side channel 2R are connected to the chamber 340, and a top surface side channel 1R2 is connected to the bottom surface side channel 2R via a through-hole channel 3R. By subjecting at least the chamber bottom surface side channel 2R to the hydrophobic treatment, when the solution flows into the chamber, the solution does not enter the bottom surface side channel unless the chamber internal pressure is increased. Hence, there is no possibility of the solution flowing out through the bottom surface side channel due to the capillary phenomenon. Regarding the wash solution chamber 14 and the intercalating agent chamber 15a, it becomes possible to reliably hold the wash solution or the intercalating agent held in the chamber in advance. Regarding the mixing chamber 13, when a liquid reagent is held in advance therein, it is possible to expect the effect of reliably holding the reagent in the chamber as in the case of the wash solution chamber or the intercalating agent chamber. Further, even when the reagent held in advance in the mixing chamber is in a solid state, it is possible to, when the sample solution is supplied to the mixing chamber; prevent the sample solution from undesirably flowing out from the chamber bottom surface side channel due to the capillary phenomenon. As for the channel to be subjected to the hydrophobic treatment if the channels 3R and 1R2 are subjected to the hydrophobic treatment in addition to the channel 2R described above, the above-mentioned function can be obtained more securely. Further, by subjecting the top surface side channel 1R1 to the hydrophobic treatment, an effect of preventing the solution inside the chamber from flowing backward even if the cassette is inadvertently turned over can be exerted. Regarding the top surface side channel 1R1 of the mixing chamber, when the liquid reagent is held in the chamber, the effect of preventing backflow at the time of turnover of the cassette can be obtained as in the case of the wash solution chamber or the intercalating agent chamber. Furthermore, since the top surface side channel 1R1 is also a channel through which the sample solution flows from the amplification chamber into the mixing chamber, the sample solution that has reached the hydrophilic chamber M from the hydrophobic channel 1R1 by the pressure can easily flow into the chamber.

By providing both the configuration in which the cross-sectional area of the channel is partly increased, and the technique of carrying out the hydrophobic treatment, it is possible to expect a further effect. That is, subjecting the channel to the hydrophobic treatment prevents the solution from entering the channel due to the capillary phenomenon. Further, if the solution has entered the channel by the variation in the internal pressure of the chamber, the moving rate of the tip end of the solution becomes smaller at the position at which the cross-sectional area of the channel becomes larger along the way. As a result of this, it is possible to prevent adjacent functions, i.e., mixing with another reagent, mixing with another solution, flowing into the adjacent chamber, entering, of the solution, the other part, and the like from being carried out.

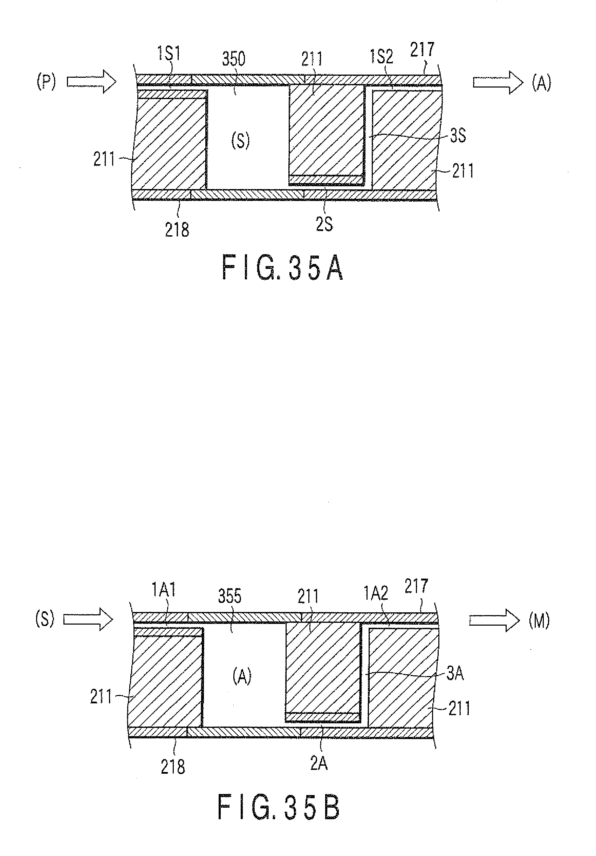

Furthermore, the hydrophobic treatment of the channel is also effective not only for the channels of the wash solution chamber, intercalating agent chamber, and mixing chamber, but also for the channels of the sample chamber 11 and the amplification chamber 12. A chamber 350 shown in FIG. 35A corresponds to the sample chamber 11. In FIG. 35A, a top surface side channel 1S1 and a bottom surface side channel 2S are connected to the chamber 350, and a top surface side channel 1S2 is connected to the bottom surface side channel 2S via a through-hole channel 3S. By subjecting the bottom surface side channel 2S of the sample chamber 350 to the hydrophobic treatment, if the sample solution is injected into the chamber while the bottom surface side channel 2S is kept open without performing a procedure of setting the cassette in the apparatus, and closing the bottom surface side channel 2S of the sample chamber, the sample solution does not flow out of the bottom surface side channel 2S. Accordingly, it becomes possible to carry out stricter testing. Furthermore, by subjecting the top surface side channel 1S1 of the sample chamber to the hydrophobic treatment, the effect of preventing the sample solution outflow at the time of turnover of the cassette after injection of the sample solution into the chamber can be expected as in the case of the wash solution chamber or the intercalating agent chamber.

A chamber 355 shown in FIG. 35B is the amplification chamber 12. In FIG. 35B, a top surface side channel 1A1 and a bottom surface side channel 2A are connected to the chamber 355, and a top surface side channel 1A2 is connected to the bottom surface side channel 2A via a through-hole channel 3A.

Regarding the amplification chamber 355, subjecting the bottom surface side channel 2A to the hydrophobic treatment makes it possible to expect the effect of preventing outflow of the solution from occurring after injection of the sample solution into the chamber as in the case of the sample chamber. Subjecting the top surface side channel 1A1 of the amplification chamber to the hydrophobic treatment makes it possible to expect that the sample solution that has reached the inside of the hydrophilic amplification chamber 355 through the hydrophobic channel 1A1 from the sample chamber can easily flow into the chamber. It is not necessary that the whole inner surface of the amplification chamber is subjected to the hydrophilic treatment. The same effect can be expected, if only an inner surface region of the amplification chamber, which is extended in the top surface side channel 1A1, have a hydrophilic characteristic. That is, the solution reached to the amplification chamber from the top surface side channel 1A1 can be delivered to the hydrophilic inner surface region of the amplification chamber, which is extended in the top surface side channel 1A1 so that the delivered solution can be guided and dropped into the amplification chamber 355. The same effect also can be expected, if the mixing chamber has a hydrophilic inner surface region which is extended in the top surface side channel 1M1.

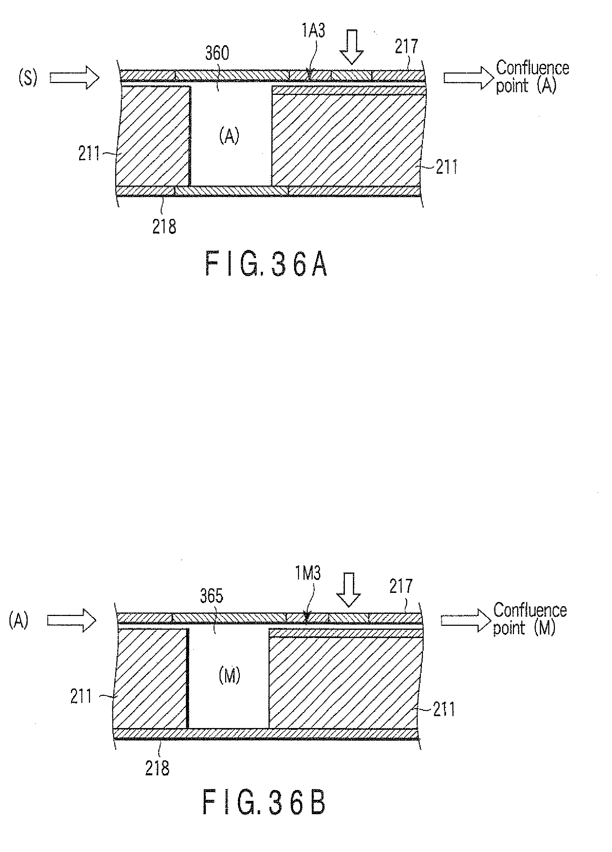

Furthermore, the hydrophobic treatment of the channel is also effective for the bypass channel 258 from the amplification chamber 12, and the bypass channel 268 from the mixing chamber 13. A chamber 360 of FIG. 36A shows the bypass channel side cross section of the amplification chamber 12. In FIG. 36A, a top surface side channel 1A3 is connected to the chamber 360. Regarding the chamber 360, the hydrophobic treatment of the top surface side channel 1A3 makes it possible to expect the effect of preventing the sample solution from mistakenly entering the top surface side channel 1A3 which is a discharging path of the air pressure from the pump section when the sample solution is delivered from the sample chamber to the amplification chamber. A chamber 365 of FIG. 36B shows the bypass channel side cross section of the mixing chamber 13. In FIG. 36B, a top surface side channel 1M3 is connected to the chamber 365. Regarding the chamber 365, the hydrophobic treatment of the top surface side channel 1M3 makes it possible to expect the effect of preventing the sample solution from mistakenly entering the top surface side channel 1M3 which is a discharging path of the air pressure from the pump section when the sample solution is delivered from the amplification chamber to the mixing chamber. The channel regions depicted by a hatched line in FIGS. 34, 35A, 35B, 36A and 36B are preferably made as a hydrophobic region, and the other channel regions are preferably made as a hydrophilic region. As describe above, if the chamber has the hydrophilic characteristic and the channel has the hydrophobic characteristic, it is possible to control the solution in an exact manner.

As has been described above, according to the present invention, it is possible to provide a nucleic acid detecting cassette intended to automatically execute the steps of nucleic acid extraction, amplification, detection, and the like to detect the target nucleic acid, as well as a nucleic acid detecting apparatus using the nucleic acid detecting cassette.

### Industrial Applicability

As has been described above, according to the present invention, it is possible to automatically execute a process including prevention of leakage of a nucleic acid into the external environment, prevention of mixing of a nucleic acid from outside, nucleic acid amplification, and other required treatments as well as detection of a target nucleic acid in a consistent manner.

Further, an internally prestored reagent is held at a predetermined position, thus undesirable outflow of the reagent is not caused, and hence stable reaction treatments and detection can be realized.

## Claims

1. A nucleic acid detecting cassette comprising:
a plate-like member which includes a front surface and an opposite surface opposed to the front surface, is made of a rigid material, and further includes a first through-hole (S), a second through-hole (S), a first groove (S1) formed in the front surface, a first groove (S2) formed in the front surface, and a second groove (S) formed in the opposite surface;
a first and second sheet-like members which cover the front surface and the opposite surface, respectively;
a pump section formed in the plate-like member, for supplying air pressure;
a sample chamber section which is defined when the first through-hole is closed by the first and second sheet-like members, communicates with the pump section, and holds a nucleic acid sample therein;
a detection section which is formed in the plate-like member, communicates with the sample chamber section, receives the nucleic acid sample, and detects a target nucleic acid from the nucleic acid sample;
a return channel for making the detection section and the pump section communicate with each other;
a first channel (1S1) defined when the first groove (S1) is covered with the first sheet-like member;
a first channel (1S2) defined when the first groove (S2) is covered with the first sheet-like member;
a second channel (2S) defined when the second groove (S) is covered with the second sheet-like member;
a third channel (3S) defined when the second through-hole (S) is covered with the first sheet-like member and the second sheet-like member, wherein
the pump section, the sample chamber section, and the detection section communicate with each other in a circular form,
the first channel (1S1) and the second channel (2S) are connected to the sample chamber section,
the third channel (3S) is connected to the second channel (2S),
the first channel (1S2) is connected to the third channel (3S),
air pressure supplied by the pump section is applied to the sample chamber section through the first channel (1S1), whereby the nucleic acid sample held in the sample chamber section is discharged through the second channel (2S), the third channel (3S), and the first channel (1S2), and
the air pressure returns from the detection section to the pump section through the circular flow path.

2. The nucleic acid detecting cassette according to claim 1, wherein the plate-like member includes a space (D) formed in the plate-like member, a first groove (D1) formed in the front surface, and a first groove (D2) formed in the front surface,
in the nucleic acid detecting cassette, the detection section is defined in the first space (D),
the detection section includes a first channel (1D1) defined when the first groove (D1) is covered with the first sheet-like member, and
a first channel (1D2) defined when the first groove (D2) is covered with the first sheet-like member,
the first channel (1D1) and the first channel (1D2) are connected to the detection section, and
the nucleic acid sample flows into the detection section through the first channel (1D1) together with the air pressure supplied from the pump section, and the air pressure supplied from the pump section is applied to the detection section through the first channel (1D1), whereby the nucleic acid sample is discharged through the first channel (1D2).

3. The nucleic acid detecting cassette according to claim 1, wherein a region of the first sheet-like member covering at least the first through-hole (S) is made of a flexible material,
a region of the second sheet-like member covering at least the first through-hole (S) is made of a flexible material,
by pressing the first sheet-like member against an opening section of the first through-hole (S) on the front surface side from outside, connection between the first through-hole (S) and the first channel (1S1) is interrupted, and
by pressing the second sheet-like member against an opening section of the first through-hole (S) on the opposite surface side from outside, connection between the first through-hole (S) and the second channel (2S) is interrupted.

4. The nucleic acid detecting cassette according to claim 1, wherein a cross-sectional area of the first through-hole (S) is larger than a channel cross-sectional area of each of the first channel (1S1), the second channel (2S), the third channel (3S), and the first channel (1S2).

5. The nucleic acid detecting cassette according to claim 1, wherein
the plate-like member includes a cavity section which surrounds a side wall of the first through-hole, and interrupts heat transfer to an adjacent chamber when the nucleic acid sample is heated.

6. The nucleic acid detecting cassette according to claim 1, wherein at least one of the first channel (1S1), the second channel (2S), and the first channel (1S2) is hydrophobic.

7. The nucleic acid detecting cassette according to claim 1, wherein
the plate-like member further includes a space (B) provided with an opening section in the front surface or the opposite surface, a second through-hole (B), a first groove (B1) formed in the front surface, the first groove (B2) formed in the front surface, and a second groove (B) provided in the opposite surface,
the nucleic acid detecting cassette further includes
a wash solution chamber section which is defined when at least the opening section of the space (B) is closed by the first sheet-like member or the second sheet-like member, communicates with the pump section and the detection section, and holds a wash solution therein,
a first channel (1B1) defined when the first groove (B1) is covered with the first sheet-like member,
a first channel (1B2) defined when the first groove (B2) is covered with the first sheet-like member,
a second channel (2B) defined when the second groove (B) is covered with the second sheet-like member,
a third channel (3B) defined when the second through-hole (B) is covered with the first sheet-like member and the second sheet-like member,
a valve section (S) for switching between opening and closing of a part between the pump section and the sample chamber section or a part between the sample chamber section and the detection section, and
a valve section (B) for switching between opening and closing of a part between the pump section and the wash solution chamber section or a part between the wash solution chamber section and the detection section,
the first channel (1B1) and the second channel (2B) are connected to the wash solution chamber section,
the third channel (3B) is connected to the second channel (2B),
the first channel (1B2) is connected to the third channel (3B), and
when the valve section (S) is closed, and the valve section (B) is opened, the air pressure supplied from the pump section is applied to the wash solution chamber section, whereby the wash solution held in the wash solution chamber is discharged through the second channel (2B), the third channel (3B), and the first channel (1B2).

8. The nucleic acid detecting cassette according to claim 7, wherein at least one of the first channel (1B1), the second channel (2B), and the first channel (1B2) is hydrophobic.

9. The nucleic acid detecting cassette according to claim 7, wherein a cross-sectional area of the first through-hole (B) is larger than a channel cross-sectional area of each of the first channel (1B1), the second channel (2B), the third channel (3B), and the first channel (1B2).

10. The nucleic acid detecting cassette according to claim 9, wherein
a cross-sectional area of a part of the third channel (3B) connected to the first channel (1B2) is larger than a part of the third channel (3B) connected to the second channel (2B).

11. The nucleic acid detecting cassette according to claim 7, wherein the plate-like member includes a space (W) provided with an opening section in the front surface or the opposite surface, a first groove (W1) formed in the front surface, and a first groove (W2) formed in the front surface,
the nucleic acid detecting cassette includes
a waste liquid chamber section which is defined when at least the opening section of the space (W) is closed by the first sheet-like member or the second sheet-like member, communicates with the detection section and the pump section, receives a waste liquid including the nucleic acid sample from the detection section, and holds the waste liquid therein,
a first channel (1W1) defined when the first groove (W1) is covered with the first sheet-like member, and
a first channel (1W2) defined when the first groove (W2) is covered with the first sheet-like member,
the first channel (1W1) and the first channel (1W2) are connected to the waste liquid chamber section, and
the waste liquid from the detection section flow into the waste liquid chamber section through the first channel (1W1) together with the air pressure supplied from the pump section, and the air pressure supplied from the pump section through the first channel (1W1) is discharged into the pump section through the first channel (1W2).

12. The nucleic acid detecting cassette according to claim 11, wherein the plate-like member further includes a space (I) provided with an opening section in the front surface or the opposite surface, a second through-hole (I), a first groove (I1) formed in the front surface, a first groove (12) formed in the front surface, and a second groove (I) formed in the opposite surface,
the nucleic acid detecting cassette includes
an intercalating agent chamber which is defined when at least the opening section of the space (I) is closed by the first sheet-like member or the second sheet-like member, communicates with the pump section and the detection section, and holds an intercalating agent therein,
a first channel (1I1) defined when the first groove (I1) is covered with the first sheet-like member,
a first (1I2) defined when the first groove (I2) is covered with the first sheet-like member,
a second channel (21) defined when the second groove (I) is covered with the second sheet-like member,
a third channel (31) defined when the second through-hole (I) is covered with the first sheet-like member and the second sheet-like member, and
a valve section (I) for switching between opening and closing of a part between the pump section and the intercalating agent chamber or a part between the detection section and the intercalating agent chamber,
the first channel (1I1) and the second channel (2I) are connected to the intercalating agent chamber,
the third channel (3I) is connected to the second channel (2I),
the firs channel (1I2) is connected to the third channel (31), and
when the valve section (S) and the valve section (B) are closed, and the valve section (I) is opened, the air pressure supplied from the pump section is applied to the intercalating agent chamber through the first channel (1I1), whereby the intercalating agent held in the intercalating agent chamber is discharged through the second channel (2I), the third channel (3I), and the first channel (1I2).

13. The nucleic acid detecting cassette according to claim 12, wherein at least one of the first channel (1I1), the second channel (2I), and the first channel (1I2) is hydrophobic.

14. The nucleic acid detecting cassette according to claim 12, wherein a cross-sectional area of the first through-hole (I) is larger than a channel cross-sectional area of each of the first channel (1I1), the second channel (2I), the third channel (31), and the first channel (1I2).

15. The nucleic acid detecting cassette according to claim 14, wherein a cross-sectional area of a part of the third channel (31) connected to the first channel (1I2) is larger than a part of the third channel (3I) connected to the second channel (2I).

16. The nucleic acid detecting cassette according to claim 1, wherein the plate-like member further includes a first through-hole (A), a second through-hole (A), a first groove (A1) formed in the front surface, a first groove (A2) formed in the front surface, and a second groove (A) formed in the opposite surface,
the nucleic acid detecting cassette includes
an amplification section which is defined when the first through-hole (A) is closed by the first and second sheet-like members, communicates with the sample chamber section and the detection section, receives the nucleic acid sample from the sample chamber, and amplifies a nucleic acid in the nucleic acid sample,
a first channel (1A1) defined when the first groove (A1) is covered with the first sheet-like member,
a first channel (1A2) defined when the first groove (A2) is covered with the first sheet-like member,
a second channel (2A) when the second groove (A) is covered with the second sheet-like member, and
a third channel (3A) defined when the second through-hole (A) is covered with the first sheet-like member and the second sheet-like member,
the pump section, the sample chamber section, the amplification chamber section, and the detection section communicate with each other in a circular form,
the first channel (1A1) and the second channel (2A) are connected to the amplification chamber section,
the third channel (3A) is connected to the second channel (2A),
the first channel (1A2) is connected to the third channel (3A), and the nucleic acid sample flows into the amplification chamber section together with the air pressure supplied from the pump section, and the air pressure supplied from the pump section is applied to the amplification chamber section through the first channel (1A1), whereby the nucleic acid sample is discharged through the second channel (2A), the third channel (3A), and the first channel (1A2).

17. The nucleic acid detecting cassette according to claim 16, wherein at least one of the first channel (1A1), the second channel (2A), and the first channel (1A2) is hydrophobic.

18. The nucleic acid detecting cassette according to claim 16, wherein a region of the first sheet-like member covering at least the first through-hole (A) is made of a flexible material, a region of the second sheet-like member covering at least the first through-hole (A) is made of a flexible material, by pressing the first sheet-like member against an opening section of the first through-hole (A) on the front surface side from outside, connection between the first through-hole (A) and the first channel (1A1) is interrupted, and by pressing the second sheet-like member against an opening section of the first through-hole (A) on the opposite surface side from outside, connection between the first through-hole (A) and the second channel (2A) is interrupted.

19. The nucleic acid detecting cassette according to claim 16, wherein a cross-sectional area of the first through-hole (A) is larger than a channel cross-sectional area of each of the first channel (1A1), the second channel (2A), the third channel (3A), and the first channel (1A2).

20. The nucleic acid detecting cassette according to claim 16, wherein the plate-like member includes a cavity section which surrounds a side wall of the first through-hole (A), and interrupts heat transfer to an adjacent chamber when the nucleic acid sample is heated.

21. The nucleic acid detecting cassette according to claim 16, wherein the plate-like member includes a first groove (A3) formed in the front surface,
the nucleic acid detecting cassette includes
a first channel (1A3) defined when the first groove (A3) is covered with the first sheet-like member, and connected to the return channel and the amplification chamber section,
a valve section (A) for switching between opening and closing of a part between the amplification chamber section and the return channel, and
a valve section (D) for switching between opening and closing of a part between the detection section and the return channel,
when the valve section (A) is opened, and the valve section (D) is closed, the nucleic acid sample flows into the amplification chamber section through the first channel (1A1) together with the air pressure supplied from the pump section, and the air pressure is returned to the pump section through the first channel (1A3), and the return channel, and
when the valve section (A) is closed, and the valve section (D) is opened, the air pressure supplied from the pump section is applied to the amplification chamber section through the first channel (1A1), whereby the nucleic acid sample is discharged through the second channel (2A), the third channel (3A), and the first channel (1A2).

22. The nucleic acid detecting cassette according to claim 21, wherein
a region of the first sheet-like member covering at least the first through-hole (A) is made of a flexible material,
a region of the second sheet-like member covering at least the first through-hole (A) is made of a flexible material,
by pressing the first sheet-like member against an opening section of the first through-hole (A) on the front surface side from outside, connection between the first through-hole (A) and the first channel (1A1), and connection between the first through-hole (A) and the first channel (1A3) are simultaneously interrupted, and
by pressing the second sheet-like member against an opening section of the first through-hole (A) on the opposite surface side from outside, connection between the first through-hole (A) and the second channel (2A) is interrupted.

23. The nucleic acid detecting cassette according to claim 16, wherein
a step section for holding a reagent is provided in a wall surface of the first through-hole (A) of the amplification chamber section or a saucer section is provided in the first through-hole (A) thereof.

24. The nucleic acid detecting cassette according to claim 16, wherein
the plate-like member further includes a space (M) provided with an opening section in the front surface or the opposite surface, a second through-hole (M), a first groove (M1) formed in the front surface, a first groove (M2) formed in the front surface, and a second groove (M) provided in the opposite surface,
the nucleic acid detecting cassette includes
a sample holding chamber section which is defined when at least the opening section of the space (M) is closed by the first sheet-like member or the second sheet-like member, communicates with the amplification chamber section and the detection section, into which the nucleic acid sample flows from the amplification chamber, and which holds the nucleic acid sample therein,
a first channel (1M1) defined when the first groove (M1) is covered with the first sheet-like member,
a first channel (1M2) defined when the first groove (M2) is covered with the first sheet-like member,
a second channel (2M) defined when the second groove (M) is covered with the second sheet-like member, and
a third channel (3M) defined when the second through-hole (M) is covered with the first sheet-like member and the second sheet-like member,
the pump section, the sample chamber section, the amplification chamber section, the sample holding chamber section, and the detection section communicate with each other in a circular form,
the third channel (3M) is connected to the second channel (2M),
the first channel (1M2) is connected to the third channel (3M),
the nucleic acid sample flows into the sample holding chamber section through the first channel (1M1), that is, the nucleic acid sample flows into the sample holding chamber section together with the air pressure supplied from the pump section, and the air pressure supplied from the pump section is applied to the sample holding chamber section through the first channel (1M1), whereby the nucleic acid sample held in the sample holding chamber section is discharged through the second channel (2M), the third channel (3M), and the first channel (1M2).

25. The nucleic acid detecting cassette according to claim 24, wherein
at least one of the first channel (1M1), the second channel (2M), and the first channel (1M2) is hydrophobic.

26. The nucleic acid detecting cassette according to claim 24, wherein a cross-sectional area of the first through-hole (M) is larger than a channel cross-sectional area of each of the first channel (1M1), the second channel (2M), the third channel (3M), and the first channel (1M2).

27. The nucleic acid detecting cassette according to claim 26, wherein
a cross-sectional area of a part of the third channel (3M) connected to the first channel (1M2) is larger than a part of the third channel (3M) connected to the second channel (2M).

28. The nucleic acid detecting cassette according to claim 24, wherein
the plate-like member includes a first groove (M3) formed in the front surface,
the nucleic acid detecting cassette includes
a first channel (1M3) defined when the first groove (M3) is covered with the first sheet-like member, and connected to the return channel and the sample holding chamber section, and
a valve section (M) for switching between opening and closing of a part between the sample holding chamber section and the return channel,
when the valve section (M) is opened, and the valve section (A) and the valve section (D) are closed, the nucleic acid sample flows into the sample holding chamber through the first channel (1M1) together with the air pressure supplied from the pump section, and the air pressure is returned to the pump section through the first channel (1M3) and the return channel, and
when the valve section (M) and the valve section (A) are closed and the valve section (D) is opened, the air pressure supplied from the pump section is applied to the sample holding chamber section through the first channel (1M1), whereby the nucleic acid sample is discharged through the second channel (2M), the third channel (3M), and the first channel (1M2).

29. The nucleic acid detecting cassette according to claim 24, wherein
a step section for holding a reagent is provided in a wall surface of the first through-hole (M) or a saucer section is provided in the first through-hole (M).

30. A nucleic acid detecting apparatus into which the nucleic acid detecting cassette according to claim 1 is inserted when the apparatus is used, comprising:
a first valve mechanism which interrupts connection between a first through-hole (S) and a first channel (1S1) by heating a sample chamber section, and pressing a first sheet-like member against an opening section of the first through-hole (S) on the front surface side, and interrupts connection between the first through-hole (S) and a second channel (2S) by pressing a second sheet-like member against an opening section of the first through-hole (S) on the opposite surface side; and
a pump mechanism which applies pressing force to the pump section to thereby give a pump function thereto.

31. A nucleic acid detecting apparatus into which the nucleic acid detecting cassette according to claim 16 is inserted when the apparatus is used, comprising:
a first valve mechanism which interrupts connection between a first through-hole (A) and a first channel (1A1) by heating an amplification chamber section, and pressing a first sheet-like member against an opening section of the first through-hole (A) on the front surface side, and interrupts connection between the first through-hole (A) and a second channel (2A) by pressing a second sheet-like member against an opening section of the first through-hole (A) on the opposite surface side; and
a pump mechanism which applies pressing force to the pump section to thereby give a pump function thereto.
